# EUROPÄISCHE PATENTANMELDUNG

(11) **EP 2 366 933 A1**
(43) Veröffentlichungstag der Anmeldung: **21.09.2011**
(21) Anmeldenummer: 10405040.6
(22) Anmeldetag: 03.03.2010
(51) Int. Cl.: F16L 37/091, F16L 37/092

(54) **Anschlussstück für Metallrohre**

(71) Anmelder: R. Nussbaum AG, 4601 Olten (CH)
(72) Erfinder: Näf, Andreas, 5000 Aarau (CH); Bobst, Urs, 4703 Kestenholz (CH); Zeiter, Patrik, 4853 Riken (CH); Tobler, Hans, 5036 Oberentfelden (CH)
(74) Vertreter: Rüfenacht, Philipp Michael

(57) **Zusammenfassung**

Ein Anschlussstück (111) für Metallrohre umfasst einen ersten rohrförmigen Teil, welcher mit einem zweiten rohrförmigen Teil eines fluidführenden Leitungssystems für Trinkwasser fluiddicht verbindbar ist. Das Anschlussstück (111) ist derart ausgebildet, dass das zweite rohrförmige Teil (160) in verbundenem Zustand teilweise vom ersten rohrförmigen Teil umschlossen ist. Im ersten rohrförmigen Teil ist an einer in verbundenem Zustand das zweite rohrförmige Teil kontaktierenden Innenmantelfläche eine umlaufende Ausnehmung (116) ausgespart, in welche ein Ringdichtungselement (150) eingebracht ist. Zwischen einer Einstecköffnung des ersten rohrförmigen Teils und dem Ringdichtungselement (150) in einem Aufnahmeraum (123) des ersten rohrförmigen Teils ist ein federndes Krallelement (140) zum axialen Sichern des eingeschobenen zweiten rohrförmigen Teils angeordnet. Das Anschlussstück (111) ist derart ausgebildet, dass das zweite rohrförmige Teil durch Einschieben in das erste rohrförmige Teil in einer Einschubrichtung im Sinn einer Steckverbindung mit dem ersten rohrförmigen Teil verbindbar ist, und das Anschlussstück (111) ist derart stütznippellos ausgebildet, dass eine Innenmantelfläche des zweiten rohrförmigen Teils in verbundenem Zustand nicht vom Anschlussstück kontaktiert wird. Das Anschlussstück (111) umfasst weiter eine aktivierbare Verdrehsicherung (181), welche im aktivierten Zustand eine Drehung des eingeschobenen zweiten rohrförmigen Teils (160) relativ zum ersten rohrförmigen Teil verhindert. Die aktivierbare Verdrehsicherung (181) ermöglicht ein einfaches Handling bei hoher mechanischen Stabilität der Steckverbindung.

## Beschreibung

Die Erfindung betrifft ein Anschlussstück für Metallrohre, mit einem ersten rohrförmigen Teil, welches mit einem zweiten rohrförmigen Teil eines fluidführenden Leitungssystems für Trinkwasser fluiddicht verbindbar ist, wobei das Anschlussstück derart ausgebildet ist, dass das zweite rohrförmige Teil in verbundenem Zustand teilweise vom ersten rohrförmigen Teil umschlossen ist. Im ersten rohrförmigen Teil ist an einer in verbundenem Zustand das zweite rohrförmige Teil kontaktierenden Innenmantelfläche eine umlaufende Ausnehmung ausgespart, in welche ein Ringdichtungselement eingebracht ist. Zwischen einer Einstecköffnung des ersten rohrförmigen Teils und dem Ringdichtungselement ist in einem Aufnahmeraum des ersten rohrförmigen Teils ein federndes Krallelement zum axialen Sichern des eingeschobenen zweiten rohrförmigen Teils angeordnet. Das Anschlussstück ist derart ausgebildet, dass das zweite rohrförmige Teil durch Einschieben in das erste rohrförmige Teil in einer Einschubrichtung im Sinn einer Steckverbindung mit dem ersten rohrförmigen Teil verbindbar ist, und das Anschlussstück ist derart stütznippellos ausgebildet, dass eine Innenmantelfläche des zweiten rohrförmigen Teils in verbundenem Zustand nicht vom Anschlussstück kontaktiert wird. Die Erfindung betrifft weiter ein Verbindungsstück (Fitting) sowie eine Armatur mit einem derartigen Anschlussstück sowie ein Verfahren zur Herstellung eines derartigen Anschlussstücks.

### Stand der Technik

Fiuidführende Leitungssysteme, insbesondere für Wasser oder wässrige Lösungen, sind zumeist aus mehreren Elementen (Rohren, Verbindungsstücken bzw. Fittings, Armaturen etc.) aufgebaut. Diese Elemente weisen üblicherweise Anschlussstücke mit rohrförmigen Teilen auf, wobei die rohrförmigen Teile mit entsprechenden rohrförmigen Teilen der Anschlussstücke benachbarter Elemente verbunden werden können. Damit die Verbindung dicht ist, d. h. damit ein Austreten der im Leitungssystem geführten Flüssigkeit bei den Verbindungsstellen verhindert wird, sind letztere mit Dichtungen versehen. Bei vielen Leitungssystemen, z. B. für die Wasserversorgung (inkl. Hausverteilung), ist eine lange Lebensdauer gefordert, d. h. die Verbindungen müssen über einen langen Zeitraum (z. B. 50 Jahre) dicht bleiben. Anschlussstücke, die für die Verwendung mit Metallrohren geeignet sein sollen, müssen Temperaturen bis mindestens 95°C und Drücke bis mindestens 16 bar langfristig, während der genannten Zeitdauer aushalten.

Zur mechanisch festen und fluiddichten Verbindung der rohrförmigen Teile sind verschiedene Verbindungstechniken bekannt. Bei einer Schraubverbindung sind die miteinander zusammenwirkenden Teile mit zueinander passenden Gewinden versehen, bei einer Pressverbindung erfolgt ein mechanisches Verpressen eines der Teile oder einer zusätzlichen Presshülse. Steckverbindungen ermöglichen ein einfaches Verbinden der rohrförmigen Teile, indem eines der Teile auf das andere auf- oder in dieses eingeschoben wird, wobei im Wesentlichen durch die Ein- bzw. Aufschiebebewegung die mechanisch feste und fluiddichte Verbindung hergestellt wird, ohne dass ein Verschrauben der beiden Teile aneinander oder eine mechanische Verpressung notwendig ist.

Steckverbinder bieten somit den Vorteil einer einfachen und schnellen Montage. Bisherige für die hausinterne Trinkwasserversorgung geeignete Steckverbinder umfassen oft einen Stütznippel, auf welchen das Leitungsrohr aufgeschoben wird. Der Stütznippel stützt das Rohr und gewährleistet eine sichere Abdichtung.

Die DE 199 45 721 A1 (Friatec AG) zeigt beispielsweise eine Steckkupplung mit einem Grundkörper, einem Dichtring, einem Klemmring sowie einem mit dem Grundkörper verbindbaren Ringkörper. Das Ende eines mit der Steckkupplung zu verbindenden Rohres kann in einen axialen Ringspalt zwischen dem Grundkörper und dem Ringkörper eingeschoben werden. In diesem Ringspalt ist der Klemmring angeordnet, welcher an der Klemmfläche des Ringkörpers und an der Aussenfläche des eingeschobenen Rohrendes unter Vorspannung anliegt. Die Steckkupplung soll für Rohre aus unterschiedlichen Werkstoffen, wie Kunststoff oder Metall oder einem Verbund derselben, gleichermassen einsetzbar sein.

Die DE 102 12 735 A1 (Georg Fischer Haustechnik AG) betrifft eine Schnellkupplung für Rohrleitungen aus Kunststoff, aus Metallkunststoffverbundwerkstoffen oder aus Leichtmetallwerkstoffen. Sie weist einen Innenteil, eine Aussenhülse sowie eine Innenhülse mit einem Zahnring und einem Klemmring auf. Die Innenhülse ist aus mindestens zwei Teilen zusammengesetzt, damit der Innenteil in diese eingesetzt werden kann.

Allerdings hat der Stütznippel der bekannten Steckverbinder zum einen eine Verengung des nutzbaren Leitungsquerschnitts zur Folge und führt somit zu einem Druckabfall in der Leitung, und zum anderen stellen Verbinder mit Stütznippel sehr hohe Anforderungen an die einzuhaltenden Fertigungstoleranzen der zu verbindenden Rohre.

Die WO 02/16817 A1 (E. Hawle & Co. Armaturenwerke) behandelt eine (nicht gattungsgemässe) stütznippellose Verbindungseinrichtung für Schutzrohre für Kabel, Datenleitungen etc. Die Schutzrohre verhindern ein Eindringen von Staub, Schmutz oder Feuchtigkeit. Ein Mittelteil umschliesst die Rohrenden und bildet zusammen mit den Verbindungsmuffen eine Ausnehmung, welche eine umschliessende Lippendichtung enthält. Die Rohre werden nach dem Hineinstecken in das Mittelteil durch ein Rückhalteelement festgehalten. Die dargestellte Anordnung ist aber nicht für fluidführende Leitungssysteme geeignet und nicht auf die entsprechenden Beanspruchungen ausgerichtet; insbesondere ist zu erwarten, dass die Abdichtung zwischen der Verbindungseinrichtung und den Rohren verloren gehen würde, wenn seitliche Kräfte auf den nicht im Anschlussstück gehaltenen Teil des Rohres wirken.

Die DE 20 2006 005 082 U 1 (Ludwig Frischhut GmbH & Co. KG) offenbart eine zugfeste, stütznippelfreie Steckverbindung für Rohrleitungen mit einem Gehäuse, welches ein Rohr umschliesst, mit einem Dichteelement, das zwischen dem Gehäuse und dem Rohr angeordnet ist, mit einem Klemmkeil und mit einer Klammer, welcher eine zusätzliche Haltefunktion zukommt. Das eingesteckte Rohr wird vorwiegend durch eine Auflagefläche am Ende gehalten, welche sich zwischen dem Dichtungselement und einem Anschlag befindet. Vorne bei der Öffnung des Gehäuses sowie zwischen dem Dichteelement und dem Klemmkeil ist ebenfalls je eine Kante vorhanden, welche das Rohr kontaktiert.

Die EP 1 962 009 A1 (IBP Conex Ltd.) zeigt einen Steckverbinder ohne Stütznippel, wobei im Gehäuse ein metallischer Krallring und eine Ringdichtung aufgenommen sind. Der Krallring umfasst eine erste Gruppe von mit dem Rohr zusammenwirkenden inneren Zähnen mit einem ersten Abknickwinkel sowie eine zweite Gruppe von mit dem Gehäuse zusammenwirkenden äusseren Zähnen mit einem zweiten Abknickwinkel. Das Gehäuse kann durch Umformen hergestellt werden, wobei nach dem Einsetzen des Krallrings die freie Kante des Werkstücks um den Krallring nach innen umgeformt wird, so dass ein nach innen gerichteter Flansch erzeugt wird, hinter welchem der Krallring axial gehalten ist.

Aufgrund der stütznippellosen Konstruktion bleibt an der Verbindungsstelle der gesamte nutzbare Leitungsquerschnitt erhalten. Das Anschlussstück lässt sich zudem einfach aufbauen. Die vorbekannten Steckverbinder vermögen aber hinsichtlich ihres Handlings und/oder der mechanischen Stabilität der damit geschaffenen Steckverbindung oft noch nicht gänzlich zu überzeugen.

### Darstellung der Erfindung

Aufgabe der Erfindung ist es, ein dem eingangs genannten technischen Gebiet zugehörendes Anschlussstück zu schaffen, welches ein einfaches Handling aufweist und eine hohe mechanische Stabilität der Steckverbindung sowie eine sichere Abdichtung ermöglicht.

Die Lösung der Aufgabe ist durch die Merkmale des Anspruchs 1 definiert. Gemäss der Erfindung umfasst das Anschlussstück eine aktivierbare Verdrehsicherung, welche im aktivierten Zustand eine Drehung des eingeschobenen zweiten rohrförmigen Teils relativ zum ersten rohrförmigen Teil verhindert.

Während des Einschiebens des zweiten rohrförmigen Teils ist es in der Regel notwendig, dass das Anschlussstück relativ zum zweiten rohrförmigen Teil um die gemeinsame Längsachse gedreht werden kann, z. B. um das Fitting oder die Armatur mit dem daran angebrachten Anschlussstück relativ zu einer Rohrleitung auszurichten. Nach erfolgter Verbindung soll aber oft keine Verdrehbarkeit mehr möglich sein, damit die Rohrverbindung stabil bzw. die Ausrichtung des Fittings oder der Armatur festgelegt ist. Eine wahlweise aktivierbare Verdrehsicherung ermöglicht sowohl ein einfaches Zusammenfügen des ersten und zweiten rohrförmigen Teils als auch die Schaffung einer stabilen Verbindung.

Die Aktivierung erfolgt bevorzugt durch Betätigen eines von aussen zugänglichen, am Anschlussstück angeordneten Bedienelements. Dieses kann so ausgebildet sein, dass es ohne Werkzeug bedienbar ist, es kann aber auch zur Betätigung mittels eines gängigen oder eines spezifisch dafür ausgebildeten Werkzeugs eingerichtet sein. Alternativ erfolgt die Aktivierung durch Beaufschlagen der Rohrverbindung mit Wasserdruck. Dieser kann beispielsweise dazu führen, dass sich der zweite rohrförmige Teil in Bezug auf den ersten rohrförmigen Teil geringfügig gegen die Einschubrichtung zurückbewegt, was die Verdrehsicherung aktivieren kann. In diesem Fall ist die Verdrehsicherung mit Vorteil so ausgebildet, dass sie - einmal ausgelöst - auch bei ausbleibendem Wasserdruck aktiviert bleibt. In jedem Fall soll das zweite rohrförmige Teil auch nach vollständigem Einschieben noch relativ zum Anschlussstück drehbar sein und die Aktivierung zu einem späteren Zeitpunkt möglich sein.

Das Anschlussstück kann insbesondere Teil eines Verbindungsstücks (Fittings) sein, welches eine Verbindung zwischen verschiedenen Elementen des Leitungssystems (also z. B. zwischen zwei Rohren oder zwischen einem Rohr und einer Armatur) schaffen kann. Das Anschlussstück kann auch Teil einer Armatur mit Absperr-, Regel- und/oder Ventilfunktion sein. Die Armatur kann aus Metall, z. B. aus Siliciumbronze, Messing, Rotguss oder Edelstahl, aber auch aus Kunststoff, z. B. aus Polypropylen (PP), Polyvinylchlorid (PVC) oder technischen Kunststoffen wie Polysulfon (PSU) Polyphenylsulfon (PPSU) oder Polyphtalamid (PPA) gefertigt sein. Metallische Oberflächen können veredelt bzw. beschichtet sein, z. B. verchromt oder mit einer durch ein PVD-Verfahren erzeugten Schicht versehen. Kunststoffe können faser- oder nanostrukturverstärkt, insbesondere glasfaserverstärkt, sein.

Mit Vorteil umfasst das Anschlussstück einen Klemmring mit keilförmigem Querschnitt, der in einer sich in Bezug auf die Einstecköffnung nach innen erweiternden Ausnehmung im ersten rohrförmigen Teil aufgenommen ist. Das Krallelement ist dabei hinter dem Klemmring angeordnet (d. h. weiter von der Einstecköffnung entfernt als der Klemmring). Beim Klemmring und dem Krallelement kann es sich um separate Teile handeln, sie können aber auch miteinander verbunden oder solidarisch ausgebildet sein. Das Krallelement dient zur axialen Sicherung des eingeschobenen zweiten rohrförmigen Teils. Das Klemmelement kann die axiale Sicherung unterstützen, indem es eine verhältnismässig grossflächige radiale Presskraft auf das zweite rohrförmige Teil ausübt, aber alternativ oder zusätzlich auch weitere Funktionen wahrnehmen, wie im Folgenden erläutert.

Der Klemmring ist in der sich erweiternden Ausnehmung verschiebbar, wobei die Ausnehmung durch das Anschlussstück selbst oder durch ein weiteres Element begrenzt sein kann. Dadurch wird gewährleistet, dass der Klemm-/Krallring sich unabhängig von Toleranzen des Rohrdurchmessers beim Zurückziehen des zweiten rohrförmigen Teils in der Ausnehmung verkeilt und somit das zweite rohrförmige Teil axial sichert. Eine optimale Sicherung und gleichzeitig ein einfaches Einschieben des zweiten rohrförmigen Teils ergeben sich, wenn die sich nach hinten erweiternde Ausnehmung einen Winkel von 1 - 30°, bevorzugt 3 - 20°, besonders bevorzugt 5-15°, zu einer Achse des ersten rohrförmigen Teils aufweist. Der Klemmring ist mit Vorteil aus Kunststoff gefertigt, z. B. aus glasfaserverstärktem Polyamid, PPSU oder einem anderen geeigneten Material.

Damit der Aussen- und Innendurchmesser variabel sind, kann der Klemmring geschlitzt sein oder mehrere Klemmsegmente umfassen, welche durch verformbare Verbindungsabschnitte miteinander verbunden sind. Der Klemmring ist mit Vorteil so ausgebildet, dass er eine Vorspannung aufweist und beim Einschieben des Rohrs aufgeweitet wird. Dies stellt eine zuverlässige Axialsicherung des Rohrs sicher. Die geschlitzte oder mehrteilige Ausbildung des Klemmrings kann auch das Einbringen des Klemmrings in seine Aufnahme bei der Herstellung des Anschlussstücks erleichtern. Alternativ kann der Klemmring auch aus einem flexiblen Material gefertigt sein, welches eine Änderung des Aussen- und Innendurchmesser und/oder eine Verformung zum Einschieben in die Aufnahme ermöglicht.

Der Kiemmring umfasst eine erste Auflagefläche zum Kontaktieren einer Mantelfläche der sich nach hinten erweiternden Ausnehmung sowie eine zweite Auflagefläche zum Kontaktieren einer Aussenseite des zweiten rohrförmigen Teils. Mit Vorteil weist nun die erste Auflagefläche des Klemmrings mindestens einen Abschnitt auf, in welchem der Winkel der ersten Auflagefläche zur zweiten Auflagefläche des Klemmrings unterschiedlich ist vom Winkel der sich nach hinten erweiternden Ausnehmung zur Achse des ersten rohrförmigen Teils. Die Differenz zwischen den Winkeln beträgt dabei bevorzugt 0.1 - 10°, besonders bevorzugt 0.1 - 5°, insbesondere 0.5 - 2°. Die erste Auflagefläche kann als Konus ausgebildet sein und über die gesamte Ausdehnung einen konstanten Winkel zur zweiten Auflagefläche aufweisen, sie kann auch mehrere Abschnitte mit verschiedenen Winkeln umfassen, z. B. einen ersten Abschnitt, in welchem der Winkel grösser ist als derjenige zwischen der sich nach hinten erweiternden Ausnehmung und der Achse des ersten rohrförmigen Teils sowie einen zweiten Abschnitt, in welchem der Winkel kleiner ist. Falls mehrere Abschnitte vorhanden sind, sind diese mit Vorteil so angeordnet, dass die Form der ersten Auflagefläche im Wesentlichen konvex ist. Schliesslich kann die Aussenfläche auch konvex gekrümmt sein oder sowohl ebene als auch gekrümmte Abschnitte aufweisen.

Der Winkelunterschied ermöglicht zum einen ein einfaches Einschieben des Rohrs mit geringer Widerstandskraft des Klemmrings. Dabei kann der erstgenannte Winkel geringer sein als der zweitgenannte Winkel, oder er ist grösser als der zweitgenannte Winkel. Je nach Ausbildung gelangt beim Zurückstossen des Rohrs das hintere bzw. das vordere Ende der zweiten Auflagefläche bzw. beim Vorhandensein einer Verzahnung bzw. Profilierung der hinterste Zahn oder das hinterste Profil bzw. der vorderste Zahn oder das vorderste Profil der zweiten Auflagefläche unmittelbar in Eingriff mit der Aussenfläche des zweiten rohrförmigen Teils, wodurch sehr schnell eine hohe Klemmkraft aufgebaut wird.

Falls mehrere Abschnitte mit unterschiedlichem Winkel vorhanden sind, ist es von Vorteil, wenn der Übergang zwischen einem ersten und einem zweiten Abschnitt radial ausserhalb eines Profils bzw. Zahns, insbesondere radial ausserhalb des mündungsnächsten Zahns, ausgebildet ist, so dass der jeweilige Zahn bzw. das jeweilige Profil unmittelbar eine grosse Klemmkraft lokal auf das zweite rohrförmige Teil ausübt.

Die Verdrehsicherung ist insbesondere mit Hilfe des Klemmrings ausgebildet. Im deaktivierten Zustand ist der Klemmring bezüglich des ersten rohrförmigen Teils und/oder bezüglich des zweiten rohrförmigen Teils drehbar. Die Aktivierung erfolgt dann entsprechend durch eine Verhinderung der Drehbarkeit des Klemmrings bezüglich des ersten rohrförmigen Teils und/oder bezüglich des zweiten rohrförmigen Teils.

Bevorzugt verhindert die aktivierbare Verdrehsicherung im aktivierten Zustand eine Drehung des Klemmrings relativ zum ersten rohrförmigen Teil. D. h. der Klemmring ist im deaktiverten Zustand der Verdrehsicherung relativ zum ersten rohrförmigen Teil drehbar, nicht jedoch im aktivierten Zustand der Verdrehsicherung.

Alternativ erfolgt die Aktivierung der Verdrehsicherung zwischen dem Klemmring und dem zweiten rohrförmigen Teil oder sowohl aussen als auch innen (letzteres z. B. durch ein Verklemmen des vorher lose eingelegten Klemmrings zwischen den beiden rohrförmigen Teilen). Ist eine Kappe vorhanden, kann der Klemmring relativ zur Kappe drehfest angeordnet sein, wobei zur Aktivierung der Verdrehsicherung die Kappe relativ zum Grundkörper festgesetzt wird. In weiteren Varianten wird nicht der Klemmring zur Verdrehsicherung eingesetzt, sondern z. B. das Krallelement oder ein weiteres Element.

Die Verdrehsicherung kann in einer vorteilhaften Ausführungsform einen axial beweglichen Abschnitt umfassen, welcher zur Aktivierung in Einschubrichtung beweglich ist und mit dem Klemmring derart zusammenwirkt, dass durch die Aktivierung eine Drehbewegung des Klemmrings relativ zum Anschlussstück um eine gemeinsame Achse des ersten und des eingeschobenen zweiten rohrförmigen Teils verhindert wird.

Der axial bewegliche Abschnitt kann die Aussenwand des Anschlussstücks durchdringen oder koaxial zum Rohr durch die Mündung des Anschlussstücks geführt sein, so dass die Verdrehsicherung von aussen betätigbar ist. Er kann auch vollständig im Innern des Anschlussstücks angeordnet und über ein weiteres Element betätigbar sein.

Dabei ist in einer ersten Ausführungsvariante der axial bewegliche Abschnitt mit einem am Klemmring angeordneten Gegenstück in Eingriff bringbar. Beim Gegenstück kann es sich um eine Profilierung eines Mantels des Klemmrings_{;} eine sacklochartige Aufnahme oder ein gesondertes Element handeln. Der axial bewegliche Abschnitt ist drehfest am ersten rohrförmigen Teil angebracht bzw. wird drehfest an diesem verrastet. Dadurch, dass der Abschnitt in Eingriff mit dem Gegenstück gebracht wird, wird auch der Klemmring am ersten rohrförmigen Teil gegen Drehung festgesetzt. Der axial bewegliche Abschnitt kann direkt als Betätigungselement ausgebildet sein, oder er wird über ein weiteres Element betätigt. Dieses weitere Element kann ebenfalls durch eine axiale Bewegung, aber auch z. B. durch eine Drehbewegung oder eine radiale Bewegung betätigt werden.

In einer weiteren Ausführungsvariante wirkt der axial bewegliche Abschnitt mit einem Klemmkeil zusammen, so dass die axiale Bewegung des Abschnitts in eine im Wesentlichen radiale Bewegung des Klemmkeils auf den Klemmring umgesetzt wird. Der Klemmkeil bildet dabei bevorzugt (zumindest teilweise) die sich nach hinten erweiternde Ausnehmung für den Klemmring. Das Zusammenwirken des Klemmkeils (welcher z. B. als Keilring ausgebildet sein kann) mit dem gegenläufig ausgebildeten keilförmigen Querschnitt des Klemmrings setzt die axiale Bewegung des Abschnitts in die im Wesentlichen radiale Bewegung des Klemmrings um. Der Klemmring wird somit beim Einschieben des Klemmkeils auf die Rohraussenseite zu bewegt, und es wird eine Klemmkraft zwischen Anschlussstück, Klemmring und Rohr aufgebaut.

In weiteren vorteilhaften Ausführungsformen weist die Verdrehsicherung mindestens einen im Anschlussstück exzentrisch schwenkbar gelagerten Schwenkhebel auf, welcher mit dem Klemmring zusammenwirkt und welcher aus einer ersten Position in eine zweite Position schwenkbar ist. Eine radiale Eindringtiefe des Schwenkhebels ist dabei in der zweiten Position grösser als in der ersten Position. Mit Eindringtiefe ist diejenige Tiefe gemeint, in welche der tiefste Punkt des Schwenkhebels in den Aufnahmeraum für den Klemmring eindringt. Der Schwenkhebel erfordert keine axiale Bewegung, durch Umsetzung der Drehbewegung in eine radiale Bewegung kann zudem bei geeigneter Geometrie mit einer geringen Betätigungskraft die erforderliche radiale Presskraft aufgebaut werden.

Damit der Klemmring radial ausreichend komprimierbar ist, aber trotzdem eine genügende mechanische Stabilität aufweist, kann er aus Komponenten unterschiedlicher Härte aufgebaut sein. So kann z. B. ein vergleichsweise harter Kern aus Metall oder einem harten Kunststoffmaterial (wie HD-PE) von einer vergleichsweise weichen Schicht umgeben sein, z. B. aus einem TPE.

Statt mit Hilfe eines Schwenkhebels kann zum Aufbau der Presskraft auch ein radial durch die Aussenwand des Anschlussstücks geführtes Element eingesetzt werden. Es ist beispielsweise denkbar, eine Reihe von Stiften radial in der Aussenwand zu lagern, wobei diese Stifte auf der Aussenseite eine keilförmig zulaufende Form aufweisen. Im Anfangszustand sind die Stifte auf der Aussenseite in Öffnungen eines Schraubrings aufgenommen. Durch Aufschrauben des Schraubrings werden die Stifte aufgrund der Keilform allmählich nach innen getrieben, wodurch sie den Klemmring radial komprimieren. Schliesslich rasten die Stifte in geringfügig zurückversetzten Ausnehmungen des Schraubrings ein.

Bevorzugt weist der Klemmring an einer Aussenmantelfläche im Wesentlichen axial verlaufende Profilierungen zum Zusammenwirken mit der Ausnehmung auf. Bei diesen Profilierungen kann es sich um eine Mehrzahl von Stegen handeln, so dass der Klemmring eine zahnradartige Form erhält. Es hat sich gezeigt, dass mit Hilfe dieser Profilierungen die Reibung zwischen dem Klemmring und der Ausnehmung verringert werden kann, insbesondere beim Zurückziehen des zweiten rohrförmigen Teils. Die Tiefe der Profilierungen ist insbesondere so gewählt, dass die Aussenfläche des Klemmrings auch bei den im Einsatz auftretenden Anpressdrucken die Aufnahme nur mit den Profilierungen kontaktiert und nicht mit den dazwischenliegenden Bereichen.

Die axialen Profilierungen können zudem als Gegenstück für den axial beweglichen Abschnitt der weiter unten beschriebenen Verdrehsicherung dienen oder eine dauerhafte Verdrehsicherung zwischen Klemmring und erstem rohrförmigem Teil schaffen, falls die Verdrehsicherung zwischen Klemmring und zweitem rohrförmigem Teil wahlweise aktivierbar ist.

Alternativ ist die Aussenfläche des Klemmrings im Wesentlichen glatt oder sie umfasst andersartige Profilierungen; um eine Verdrehsicherung zu schaffen, kann die Aussenfläche des Klemmrings beispielsweise mit einer Vielzahl von kleinen Zähnen versehen sein, die insbesondere aus einem härteren Material hergestellt sind als der Grundkörper des Klemmrings.

Es ist grundsätzlich auch denkbar, den Klemmring vor der ersten Führungsfläche oder hinter der umlaufenden Ausnehmung für das Ringdichtungselement anzuordnen. Alternativ wird auf den Klemmring verzichtet, wobei die axiale Sicherung vollständig vom Krallelement wahrgenommen wird.

Der Klemmring kann an einer Innenmantelfläche mindestens eine in axialer Richtung verlaufende Profilierung aufweisen. Dies ist insbesondere dann von Vorteil, wenn die Verdrehsicherung über den Klemmring erfolgt: Die axiale Profilierung erschwert ein Verdrehen des aufgenommenen Rohrs relativ zum Klemmring. Die axiale Profilierung kann mit den weiter unten beschriebenen umlaufenden Profilierungen der Innenmantelfläche kombiniert sein.

Bevorzugt ist zwischen der Einstecköffnung und dem Krallelement im ersten rohrförmigen Teil ein zweites Dichtungselement angeordnet, um den Aufnahmeraum für das Krallelement in Richtung der Einstecköffnung abzudichten.

Es hat sich nämlich gezeigt, dass ein Grund für die beschränkte Lebensdauer von Steckverbindern darin liegt, dass das (insbesondere metallische) Krallelement für die axiale Sicherung des aufgenommenen Rohrs durch den Einfluss von Feuchtigkeit (eindringender Luftfeuchtigkeit und Schwitzwasser bzw. Kondenswasser) korrodiert und somit nach einiger Zeit seine Funktion nicht mehr zuverlässig wahrnehmen kann. Durch die Abdichtung des Aufnahmeraums für das Krallelement gegen aussen durch das zweite Dichtungselement wird das Korrosionsrisiko minimiert. Der Steckverbinder kann somit während der geforderten Lebensdauer von 50 Jahren (oder mehr) die hohen Temperaturen und Drucke aufnehmen, die in Leitungen aus Metallrohren auftreten können.

In einer bevorzugten Ausführungsform bildet der Klemmring das zweite Dichtungselement. Er ist also zwischen der Einstecköffnung und dem Krallring angeordnet und derart ausgebildet, dass er den Aufnahmeraum für das Krallelement gegen aussen abdichten kann. Dazu muss es radial innen und aussen abdichtend ausgebildet sein, d. h. sowohl gegenüber der Rohraussenfläche als auch gegenüber der Ausnehmung abdichten.

Dazu weist der Klemmring mit Vorteil einen formstabilen Grundkörper und einen elastischen Dichtungsteil, insbesondere eine Schicht aus einem thermoplastischen Elastomer (TPE), auf. Die Schicht aus TPE kann auf dem Grundkörper ganz- oder teilflächig aufvulkanisiert sein. Neben einer guten Abdichtwirkung kann sie auch für weitere Funktionen des Klemmrings, z. B. für die Verdrehsicherung, von Vorteil sein; ein Klemmring mit einer solchen Schicht ist also auch bei Anschlussstücken bekannt, welche keine Abdichtung des Aufnahmeraums für das Krallelement aufweisen oder bei welchen die Abdichtung nicht durch den Klemmring, sondern durch ein weiteres Element wahrgenommen wird. Insbesondere weist die elastomere Schicht eine grössere Reibung mit anderen Oberflächen auf als ein formstabiler Kunststoff. Falls der Klemmring somit zu einer axialen oder Verdrehsicherung beiträgt, kann eine TPE-Schicht von Vorteil sein.

Alternativ kann der Klemmring auch Einsätze aus anderen Materialien aufweisen, z. B. aus weicheren Materalien zur Abdichtung gegen das Rohr und/oder die Ausnehmung.

Vorzugsweise umfasst der Klemmring an einer Innenmantelfläche zudem mindestens zwei beabstandete umlaufende Profilierungen, welche mit einem gewissen Druck auf die Aussenfläche des zweiten rohrförmigen Teils gedrückt werden. Die Profilierungen können z. B. die Form eines Sägezahnprofils haben. Die umlaufenden Profilierungen schaffen eine durchgehende Abdichtung zwischen zweitem rohrförmigen Teil und Klemmring. Die Anordnung zweier beabstandeter Profilierungen stellt einen stabilen Kontakt zwischen Klemmring und zweitem rohrförmigen Teil sicher.

Falls der Klemmring gleichzeitig zur Abdichtung der Aufnahme für den Krallring dient, umfasst der Klemmring auf seiner Aussenmantelfläche (ggf. zusätzlich zu den axialen Profilierungen) mit Vorteil eine oder mehrere umlaufende Profilierungen, die - analog zu den Profilierungen an der Innenmantelfläche die Abdichtung sicherstellen. Die Profilierungen können einstückig mit dem Grundkörper des Klemmrings ausgebildet oder durch ein Element aus einem anderen Material gebildet sein.

Dient der Klemmring auch zur Abdichtung der Aufnahme für den Krallring, ist eine axial durchgehend geschlitzte Ausführung nicht möglich. Um sowohl die Abdichtung zu gewährleisten als auch eine Änderung des Aussen- und Innendurchmessers zu ermöglichen, kann der Klemmring vollständig aus komprimierbaren und/oder aufweitbaren Materialien gefertigt sein. Als Variante ist die Anbringung von nicht durchgehenden Schlitzen und einer konvexen Aussenfläche möglich, was eine Durchmesseränderung durch Änderung des Winkels des Aussenmantels zur Achse des Anschlussstücks ermöglicht. Weiter ist es möglich, an einem geschlitzten oder aus mehreren Segmenten aufgebauten Klemmringgrundkörper ein zusätzliches, elastisches Dichtelement anzubringen, welches die Durchmesseränderungen des Grundkörpers mitmachen kann.

In einer weiteren bevorzugten Ausführungsform des erfindungsgemässen Anschlussstücks umfasst die Verdrehsicherung einen von aussen freigebbaren Federmechanismus. Dieser wirkt nach Freigabe derart mit dem Krallelement zusammen, dass eine Drehbewegung des Krallelements relativ zum Anschlussstück um eine gemeinsame Achse des ersten und des eingeschobenen zweiten rohrförmigen Teils verhindert wird. Diese Lösung ermöglicht auch eine Verdrehsicherung bei Anschlussstücken ohne Klemmring, ein derart in Drehrichtung festsetzbarer Krallring kann aber auch mit einem zusätzlichen Klemmring kombiniert sein. Beim Federmechanismus kann es sich z. B. um eine im Wesentlichen axial orientierte Blattfeder handeln, deren freies Ende nach der Freigabe formschlüssig in eine Aussenkontur des Krallrings einschnappt aber auch z. B. um eine Schraubenfeder, welche nach Freigabe ein Blockierstück in eine solche Aussenkontur bewegt. Grundsätzlich ist es auch möglich, dass der Federmechanismus durch Kraftschluss auf den Krallring einwirkt, um ein Verdrehen zu verhindern.

Alternativ kann ein solcher Federmechanismus auch im Zusammenhang mit einem Klemmring eingesetzt werden. Der Federmechanismus verfügt in diesem Fall über ein Element, welches nach der Freigabe die Drehung des Klemmrings durch Form- oder Kraftschluss verhindern kann, oder aber der Federmechanismus führt nach der Freigabe dazu, dass der Klemmring radial komprimiert wird, so dass eine Presskraft zwischen Anschlussstück, Klemmring und Rohr aufgebaut wird.

Bevorzugt weist das Anschlussstück zudem zwei umlaufende Führungsflächen für den zweiten rohrförmigen Teil auf, nämlich eine erste Führungsfläche im Bereich einer Innenmantelfläche des ersten rohrförmigen Teils und eine in Bezug auf eine Einstecköffnung des Anschlussstücks hinter der ersten Führungsfläche angeordnete zweite Führungsfläche, ebenfalls im Bereich der Innenmantelfläche des ersten rohrförmigen Teils. Die umlaufende Ausnehmung für das Ringdichtungselement ist zwischen der ersten Führungsfläche und der zweiten Führungsfläche angeordnet. Eine erste axiale Ausdehnung der ersten Führungsfläche und eine zweite axiale Ausdehnung der zweiten Führungsfläche betragen insbesondere jeweils mindestens ein Sechstel eines Innendurchmessers des ersten rohrförmigen Teils, bevorzugt mindestens ein Viertel des Innendurchmessers. Es ist zudem von Vorteil, wenn die Summe der axialen Ausdehnungen beider Führungsflächen zusammen mindestens zwei Drittel, bevorzugt mindestens drei Viertel des Innendurchmessers des rohrförmigen Teils erreicht.

Die vergleichsweise langen Führungsflächen beidseits des Ringdichtungselements stellen sicher, dass der zweite rohrförmige Teil sicher und fluiddicht im Anschlussstück gehalten ist, auch wenn seitliche Kräfte auf den nicht im Anschlussstück gehaltenen Teil des Rohres wirken. Die erste Führungsfläche gewährleistet zudem, dass der Querschnitt des Rohrs im Bereich der Abdichtung auch dann kreisförmig ist, wenn das Rohr unmittelbar ausserhalb des Anschlussstücks abgebogen ist oder seitliche Kräfte erfährt. Die zweite, hintere Führungsfläche verhindert ein Verkanten des zweiten rohrförmigen Teils im Bereich der Dichtung und gewährleistet eine sichere Abdichtung auch bei abgeschrägten Rohrenden. Weiter ist durch die lange Führungsfläche hinter dem Ringdichtungselement sichergestellt, dass der Monteur beim Einschieben des Rohrs deutlich spürt, wenn dieses genügend weit in das Anschlussstück eingeschoben wurde; eine gewisse Toleranz ist zudem für den Fall gegeben, dass das Rohr nicht bis ganz ans Ende der Steckverbindung gestossen wird.

Bei einer bevorzugten Ausführungsform der Erfindung umfasst das Anschlussstück einen Grundkörper aus Metall und einen Kappenteil, wobei die erste Führungsfläche am Kapptenteil und die zweite Führungsfläche am Grundkörper ausgebildet sind und wobei das Kappenteil insbesondere aus Metall hergestellt ist. Die Ausbildung des Anschlussstücks mit einem Kappenteil vereinfacht den Zusammenbau des Anschlussstücks. Die Kappe kann zudem zusätzliche Funktionen wahrnehmen, indem sie beispielsweise in Bezug auf den Grundkörper drehbar und/oder axial verschiebbar ausgebildet ist oder indem sie zum Lösen der Verbindung vom Grundkörper entfernbar ist.

Die umlaufende Ausnehmung für das Ringdichtungselement ist bevorzugt im Grundkörper ausgebildet, d. h. die Ausnehmung wird sowohl vorne und hinten als auch aussen vom Grundkörper begrenzt. Die Einkammerung gewährleistet eine sichere Führung des Ringdichtungselements und somit eine hohe Druckfestigkeit. Die separate Einkammerung des Ringdichtungselements trennt die Dichtfunktion von der Krall- und Klemmfunktion. Indem zwischen dem Ort des Dichtens und dem Ort des Krallens/Klemmens ein Abstand vorgesehen wird, kann die Abdichtsicherheit zusätzlich erhöht werden.

Alternativ ist die Ausnehmung für das Ringdichtungselement zwischen der Kappe und dem Grundkörper bzw. dem Grundkörper und einem weiteren Element bzw. zwischen der Kappe und einem weiteren Element ausgebildet.

Ein bevorzugter Aufbau des Anschlussstücks ist also folgender: Auf den Grundkörper ist ein Kappenteil aufgeschraubt, an dessen Innenmantel die erste Führungsfläche ausgebildet ist. Hinten an die erste Führungsfläche schliesst sich im Innenmantel des Kappenteils die sich erweiternde Ausnehmung für das Klemmelement an. Der folgende Abschnitt des ersten rohrförmigen Teils wird vom Grundkörper gebildet. In diesem Abschnitt sind zunächst die umlaufende Ausnehmung für das Ringdichtungselement und dahinter die zweite Führungsfläche ausgebildet. Das Ringdichtungselement ist vollständig im Grundkörper aufgenommen, das Klemmelement und das Krallelelement sind zwischen dem Kappenteil und dem Grundkörper gehalten. Das Klemmelement weist mit Vorteil eine Vorspannung auf, welche sicherstellt, dass sich im Ausgangszustand, d. h. vor dem Einschieben des zweiten rohrförmigen Teils, das Klemmelement, das Krallelelement und der anschliessende Abschnitt des Grundkörpers unmittelbar folgen. Das flexible Ringdichtungselement lässt sich einfach in die Ausnehmung im Grundkörper einbringen, während das Klemm- und das Krallelelement vor dem Zusammenbau von Kappenteil und Grundkörper an den vorgesehenen Stellen platziert werden.

Das Anschlussstück kann eine im Grundkörper aufgenommene, axial verschiebbare Hülse umfassen, in welcher die umlaufende Ausnehmung für das Ringdichtungselement ausgespart ist. Die Hülse umfasst einen Betätigungsflansch, welcher derart ausgebildet ist, dass er beim Einschieben des zweiten rohrförmigen Teils von der Stirnseite des zweiten rohrförmigen Teils kontaktiert wird, so dass die Hülse in axialer Richtung mitgenommen wird. Die Hülse kann als Betätigungselement dienen, um Aktionen freizugeben, die erst bei vollständig eingeschobenem zweiten rohrförmigen Teil sinnvoll sind, z. B. eine Sicherung gegen ein Verdrehen des eingeschobenen zweiten rohrförmigen Teils. Ebenso kann die Hülse derart mit einem Sensor zusammenwirken, dass ihre axiale Bewegung die Feststellung ermöglicht, ob das zweite rohrförmige Teil vollständig eingeschoben ist. Sobald dies der Fall ist, kann der Monteur entsprechend informiert werden.

Die Hülse wirkt mit Vorteil mit dem Kappenteil derart zusammen, dass dieses in einer ersten Stellung der Hülse gegenüber dem Grundkörper drehfest ist und dass dieses in einer zweiten, eingeschobenen Stellung der Hülse gegenüber dem Grundkörper drehbar ist. Durch Drehung des Kappenteils kann dann beispielsweise eine Sicherung des zweiten rohrförmigen Teils gegen ein Verdrehen relativ zum ersten rohrförmigen Teil aktiviert werden.

Bei einer anderen bevorzugten Ausführungsform umfasst das Anschlussstück einen Grundkörper aus Metall, an welchem sowohl die umlaufende Ausnehmung für das Ringdichtungselement als auch die erste umlaufende Führungsfläche und die zweite umlaufende Führungsfläche ausgebildet sind.

Dadurch kann das Anschlussstück besonders einfach, kompakt und damit kostengünstig und dauerhaft aufgebaut werden. Komplizierte Verbindungen zwischen einem Grundkörper und einer Kappe, welche Raum erfordern und zudem oft auch physische Schwachstellen bilden, können vermieden werden.

Der Grundkörper ist bevorzugt aus Kupfer oder einer kupferhaltigen Legierung (wie z. B. Rotguss) hergestellt. Eine geeignete Legierung ist auch in der EP 2 014 964 (R. Nussbaum AG) erwähnt. Der Kupferanteil der Legierung gewährleistet, dass der bei der Montage im Aufnahmeraum für das Krallelement vorhandene Wasserdampf gebunden wird, so dass der Aufnahmeraum praktisch wasserdampf- und sauerstofffrei ist. Gemeinsam mit der Abdichtung des Aufnahmeraums nach aussen wird somit die Korrosion des Krallelements wirkungsvoll unterbunden.

Alternativ ist der Grundkörper aus einem anderen Material hergestellt, z. B. einem Edelstahl.

Mit Vorteil umfasst das Anschlussstück eine elektrische Kontaktregion in einem Bereich eines Anschlags für eine Stirnseite des zweiten rohrförmigen Teils, wobei die elektrische Kontaktregion gegenüber dem Grundkörper elektrisch isoliert ist und wobei eine elektrische Durchführung zum Kontaktieren der Kontaktregion von aussen vorhanden ist.

Dies ermöglicht eine Detektion der Einschubtiefe des zweiten rohrförmigen Teils. Die Einschubtiefe bzw. das Erreichen einer ausreichenden Einschubtiefe kann dem Benutzer angezeigt werden, so dass sichergestellt ist, dass die Verbindung sicher hergestellt ist. Die Detektion der Einschubtiefe kann durch direkte elektrische Kontaktierung aber auch beispielsweise kapazitiv oder induktiv erfolgen. Mit Hilfe der Durchführung lassen sich entsprechende Signale nach aussen, insbesondere zu einem externen Mess- und Anzeigegerät, transportieren.

Bei einer vorteilhaften Ausführungsform der Erfindung weist das Krallelement einen äusseren kreisringförmigen radialen Abschnitt auf sowie einen nach innen anschliessenden geschlitzten inneren Abschnitt mit einer Mehrzahl von Krallen. Ein freies Ende der Krallen weist jeweils einen konkaven Abschnitt auf, wobei insbesondere eine Kontur des freien Endes die Form eines Kreisabschnitts hat, mit einem Durchmesser, der einem Durchmesser des aufzunehmenden zweiten rohrförmigen Teils entspricht.

Der konkave Abschnitt schafft eine verhältnismässig grosse Kontaktfläche mit dem zweiten rohrförmigen Teil, so dass dazwischen wirkende Kräfte verteilt werden. Dies hat insbesondere den Vorteil, dass die mechanische Belastung der Krallen des Krallelements reduziert werden kann.

Alternativ, insbesondere wenn der Krallring auch zur Verdrehsicherung des zweiten rohrförmigen Teils gegenüber dem Anschlussstück dient, kann das freie Ende der Krallen auch anders ausgebildet sein, z. B. mit einer geraden Kante, die tangential zur Mittelsenkrechten der jeweiligen Kralle verläuft. Es ist auch möglich, dass das Krallelement unterschiedlich geformte Krallen aufweist, wobei ein erster Krallentyp primär zur axialen Sicherung und ein zweiter Krallentyp unterschiedlicher Geometrie primär zur Verdrehsicherung dient.

Mit Vorteil schliesst der innere Abschnitt des Krallelements zum äusseren Abschnitt einen Winkel von 0 - 70°, bevorzugt 1 - 60°, besonders bevorzugt 20 - 50°, ein. Bei einem ausreichend grossen Winkel zwischen den beiden Abschnitten kann das Krallelement an seinem entsprechenden knickartigen Übergang auf dem angrenzenden Abschnitt des Anschlussstücks geführt und somit in Bezug auf das einzuschiebende zweite rohrförmige Teil zentriert werden. Ist der Winkel in Bezug auf die mit der Aussenseite des zweiten rohrförmigen Teils zusammenwirkenden Bereiche des inneren Abschnitts kleiner, können einzelne wenige (bevorzugt mindestens 3) zahnartige Teile des inneren Abschnitts mit einem grösseren Winkel ausgeführt werden und auf diese Weise die Führung auf dem angrenzenden Abschnitt des Anschlussstücks sicherstellen. Alternativ erfolgt die Führung im Bereich des äusseren Abschnitts, z. B. indem aussen anschliessend an den äusseren Abschnitt ein weiterer, zylindrischer Abschnitt vorgesehen wird, der auf einem axialen Abschnitt des Anschlussstücks geführt wird.

Die angegebenen Winkel gewährleisten zudem eine sichere Krallwirkung bereits bei geringem axialen Weg. Das Krallelement ist bevorzugt aus Federstahl hergestellt, kann aber auch aus einem anderen Material (z. B. Kupfer) gebildet sein. Die Materialstärke beträgt mit Vorteil 0.1-1.0 mm, bevorzugt 0.2-0.6mm, besonders bevorzugt 0.25-0.4 mm. Die Ausbildung des Krallelements aus Metall stellt sicher, dass dieser seine Elastitzität dauerhaft beibehält und auch am Ende der langen geforderten Lebensdauer noch eine axiale Sicherung gewährleistet.

Bevorzugt ist das Ringdichtungselement eine Formdichtung in der Form einer Lippendichtung. Unter den Begriff Lippendichtung werden hier auch Dichtungen subsumiert, die teilweise als "Kompaktdichtung" bezeichnet werden und welche nicht nur lippenartige Teile aufweisen, sondern auch einen kompakten Grundkörper, an welchem die Lippen in der Art von Fortsätzen ausgebildet sind. Ein solches Element ermöglicht eine sichere Abdichtung, die vom Mediumdruck des im zweiten rohrförmigen Teil und im Anschlussstück geführten Fluids noch unterstützt wird. Durch den Einsatz von geeignet geformten Formdichtungen lassen sich zudem die benötigte Einsteckkraft für das zweite rohrförmige Teil auf praktikable Werte von unter 100 N, bevorzugt unter 40 N, verringern und grössere Toleranzen des Rohraussendurchmessers auffangen.

In dieser Hinsicht ist es von Vorteil, wenn die Ausnehmung für das Ringdichtungselement sich in Bezug auf die Einstecköffnung nach hinten erweitert und wenn die Lippendichtung einen im Wesentlichen V-förmigen Querschnitt hat und mit ihrer offenen Stirnseite in Einschubrichtung in der Ausnehmung aufgenommen ist. Die offene Stirnseite zwischen den beiden Schenkeln der V-Form ist also dem geführten Medium zugewandt, die zusammenlaufende Seite der Eingangsöffnung des Anschlussstücks. Das Medium drückt aufgrund seines Drucks die beiden Schenkel auseinander und unterstützt somit eine sichere Abdichtung. Die Keilform der Lippendichtung ermöglicht ein einfaches Einschieben des zweiten rohrförmigen Teils und ist der sich erweiternden Ausnehmung für das Ringdichtungselement angepasst.

Der äussere Schenkel, welcher mit der Mantelfläche der Ausnehmung zusammenwirkt weist mit Vorteil eine Profilierung auf, z. B. in der Form von mehreren umlaufenden Rillen. Es hat sich gezeigt, dass eine solche Profilierung die Abdichtsicherheit einer solchen Lippendichtung weiter verbessert.

Alternativ kann das Ringdichtungselement auch beispielsweise als O-Ring ausgeführt sein.

Die Ringdichtung ist mit Vorteil aus einem Kautschukmaterial (z. B. EPDM, HNBR) gefertigt und hat eine Härte von beispielsweise 30 - 95 Shore A, bevorzugt 60 - 80 Shore A. Es hat sich herausgestellt, dass mit einem Material in diesem Härtebereich eine bestmögliche Abdichtung bei grösstmöglichen Rohrtoleranzen erreichbar ist. Um die Gleitfähigkeit der Ringdichtung im Bedarfsfall zu steigern, kann sie teflonisiert, gefettet und/oder geölt werden. Dadurch lässt sich die Einsteckkraft reduzieren. Ein Fettauftrag an der Innenseite der Ringdichtung kann zudem eine verbesserte Abdichtung gegenüber Unebenheiten der Rohraussenseite schaffen, indem das aufgebrachte Fett in diese Unebenheiten (wie Längsriefen oder Kratzer) eindringt. Um ein Auswaschen des Fetts zu verhindern, wird dieses mit Vorteil in eine Ausnehmung an der Innenseite der Ringdichtung eingebracht, welche es axial und radial einschliesst. Geeignete Fette basieren beispielsweise auf der Kombination eines organischen Polymers und Dimethyl-Polysiloxan oder auf Silikonöl und gehören bevorzugt den NLGI-Klassen 1 - 3 an.

Die Ringdichtung kann auch aus einem wasserquellbaren Material gefertigt sein, so dass sie beim ersten Kontakt mit dem in der Leitung geführten Wasser aufquillt und die Dichtwirkung verstärkt.

Mit Vorteil umfasst das Ringdichtungselement ein erstes Ringdichtungsteil sowie ein zweites Ringdichtungsteil, wobei das erste Ringdichtungsteil aus einem Material hergestellt ist, welches eine grössere Härte aufweist als das Material, aus welchem das zweite Ringdichtungsteil hergestellt ist. Die Härte des ersten Ringdichtungsteils beträgt z. B. 30 - 95 Shore A, bevorzugt 60 - 80 Shore A wie oben angegeben, während das zweite Ringdichtungsteil eine geringere Härte im Bereich von 20 - 80 Shore A, bevorzugt 40 - 70 Shore A aufweist. Der härtere Teil des Ringdichtungselements gewährleistet die erforderliche mechanische Stabilität und verhindert eine Extrusion entlang des Spalts zwischen Anschlussstück und Rohraussenseite. Der weichere Teil passt sich der Oberfläche des Rohrs bestmöglich an und schafft so auch bei Rohrunebenheiten wie z. B. Längsriefen oder Kratzer eine sichere Abdichtung.

Die beiden Rohrdichtungsteile können mechanisch aneinander befestigt sein, z. B. durch gegenseitigen Formschluss, durch eine Verklebung oder durch Herstellung in einem Zweikomponenten-Spritzverfahren. Sie können aber auch separat ausgebildet und gegebenenfalls einzeln in das Anschlussstück eingebracht werden.

Das erste und das zweite Ringdichtungsteil sind bevorzugt derart ausgebildet, dass das erste Rohrdichtungsteil das zweite Rohrdichtungsteil axial beidseitig stützt. So wird eine Extrusion des weicheren Rohrdichtungsteils entlang der Rohraussenseite verhindert und die mechanische Stabilität des Ringdichtungselements gewährleistet. Das erste Rohrdichtungsteil kann beispielsweise im Wesentlichen U-förmig ausgebildet sein, so dass das zweite Rohrdichtungsteil zwischen den beiden Schenkeln des ersten Rohrdichtungsteils und der Rohraussenseite aufgenommen werden kann.

Die vorstehenden Merkmale bevorzugter Ausführungen des Anschlussstücks, insbesondere die axial verschiebbare Hülse für das Ringdichtungselement, die einstückige Ausführung aus Metall, die Mittel zur Detektion der Einstecktiefe, die Abdichtung des Aufnahmeraums für das Krallelement und die Ausbildung der Krallen des Krallelements, lassen sich auch im Rahmen von Anschlussstücken vorteilhaft realisieren, die nicht vom erfindungsgemässen Typ sind. Insbesondere ist ihr Einsatz auch bei stütznippellosen Anschlusstücken von Vorteil, die keine aktivierbare Verdrehsicherung aufweisen.

Ein erfindungsgemässes Anschlussstück wird bevorzugt hergestellt, indem das erste rohrförmige Teil des Anschlussstücks aus einem Rohrformling durch Umformen hergestellt wird, wobei nach Einsetzen des Krallelements und/oder Klemmrings eine zwischen dem Krallelement und/oder dem Klemmring und der Einstecköffnung angeordnete erste umlaufende Führungsfläche erzeugt wird, wobei eine axiale Ausdehnung der Führungsfläche mindestens ein Sechstel eines Innendurchmessers des ersten rohrförmigen Teils beträgt. Die Herstellung durch Umformen ist kostengünstig und ermöglicht die einstückige Herstellung des Anschlussstücks, auch wenn das Krallelement und/oder der Klemmring nicht derart verformbar ausgebildet sind, dass sie durch die Mündung des fertigen Anschlussstücks eingeführt werden können. Die Führungsfläche kann beispielsweise dadurch geschaffen werden, dass der teilweise umgeformte Rohrformling nach dem Einsetzen des Krall- und/oder Klemmrings in einem vom freien Ende des Rohrformlings entfernten Bereich verengt wird, wonach der verengte Durchmesser über die axiale Ausdehnung der Führungsfläche, ggf. bis zum freien Ende des Rohrformlings, beibehalten wird.

Bei einem bevorzugten Verfahren zur Ermittlung der Einstecktiefe eines zweiten rohrförmigen Teils aus Metall in einem ersten rohrförmigen Teil aus Metall wird im Bereich eines Anschlags für das zweite rohrförmige Teil eine Induktivität und/oder Kapazität und/oder eine Änderung einer Induktivität und/oder Kapazität gemessen. Daraus wird mindestens ein Messwert erhalten, aus diesem dann auf ein Vorhandensein des zweiten rohrförmigen Teils im Bereich des Anschlags geschlossen werden kann.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1A, B: Eine erste Ausführungsform eines erfindungsgemässen Anschlussstücks;
- Fig. 2A, B: eine zweite Ausführungsform eines erfindungsgemässen Anschlussstücks;;
- Fig. 3A, B: eine dritte Ausführungsform eines erfindungsgemässen Anschlussstücks;
- Fig. 4: eine vierte Ausführungsform eines erfindungsgemässen Anschlussstücks;;
- Fig. 5: eine fünfte Ausführungsform eines erfindungsgemässen Anschlussstücks;
- Fig. 6A, B: eine sechste Ausführungsform eines erfindungsgemässen Anschlussstücks;
- Fig. 7A-C: eine siebte Ausführungsform eines erfindungsgemässen Anschlussstücks;
- Fig. 8: ein Schrägbild eines ersten Krallrings für ein erfindungsgemässes Anschlussstück;
- Fig. 9: ein Schrägbild eines zweiten Krallrings;
- Fig. 10: einen Querschnitt einer Lippendichtung für ein erfindungsgemässes Anschlussstück;
- Fig.11: einen Querschnitt eines mehrteiligen Dichtungselements für ein erfindungsgemässes Anschlussstück;
- Fig. 12: ein Schrägbild eines ersten Klemmrings für ein erfindungsgemässes Anschlussstück;
- Fig. 13: ein Schrägbild eines zweiten Klemmrings;
- Fig. 14: ein Schrägbild eines dritten Klemmrings; und
- Fig. 15A, B ein: Schrägbild und einen Querschnitt eines vierten Klemmrings.

Grundsätzlich sind in den Figuren gleiche Teile mit gleichen Bezugszeichen versehen.

### Wege zur Ausführung der Erfindung

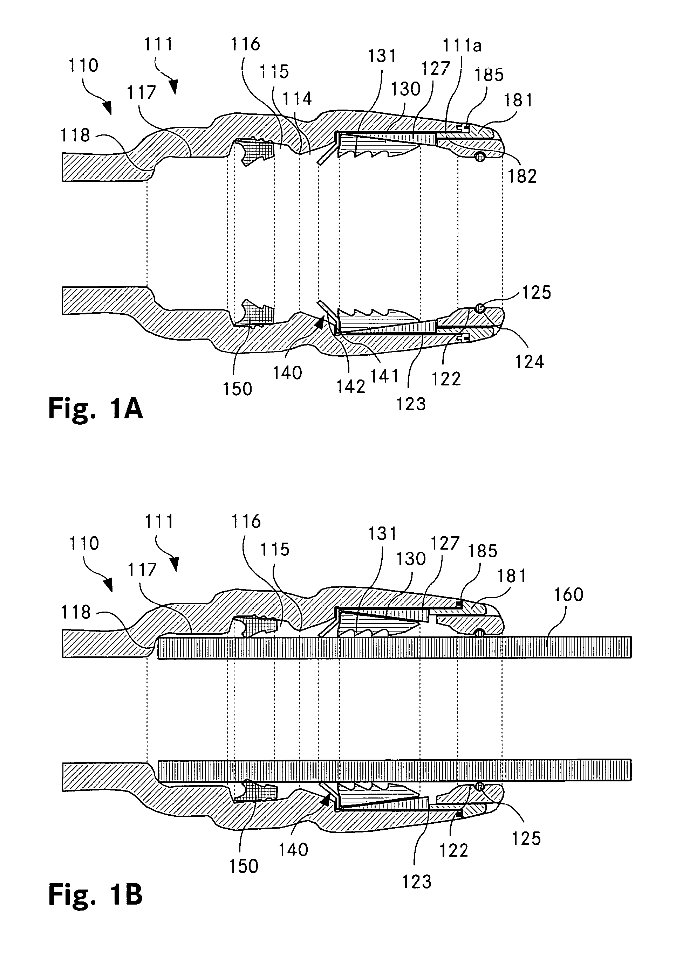

Die Figuren 1A, 1 B zeigen eine erste Ausführungsform eines erfindungsgemässen Anschlussstücks. In der Figur 1A ist die Situation vor dem Einschieben eines Rohrs dargestellt, die Figur 1B zeigt die Situation nach dem Einschieben des Rohrs und dem Aktivieren der Verdrehsicherung. Dargestellt ist ein Bauelement 110 (z. B. Fitting, Armatur etc.) mit einem Anschlussstück 111, welches zur Aufnahme eines Endes eines Metallrohrs 160 (z. B. aus Edelstahl) geeignet ist. Das Anschlussstück 111 ist mit dem Bauelement 110 einstückig aus einem Rohrformling aus Silicium-Bronze hergestellt.

Das Anschlussstück 111 ist an seinem vorderen Teil, auf sein freies Ende hin, zulaufend ausgebildet und hat in einem vorderen Abschnitt einen Innenquerschnitt, der dem Aussenquerschnitt des aufzunehmenden Rohrs 160 entspricht. Das Anschlussstück 111 1 bildet in diesem Abschnitt somit eine zylindrische Führungsfläche 122 für das Rohr. Im Bereich dieser Führungsfläche 122 ist im Anschlussstück 111 eine ringförmig umlaufende Ausnehmung 124 mit im Wesentlichen halbkreisförmigem Querschnitt ausgespart. In dieser Aufnehmung ist ein O-Ring 125 aufgenommen.

Das Anschlussstück 111 weist in seinem vorderen Teil, nahe seines freien Endes, weiter eine ringförmige Ausnehmung 123 mit ungefähr rechteckigem Querschnitt auf. In dieser Ausnehmung 123 sind ein Keilring 127 und ein Klemmring 130 gehalten. Der Keilring 127 liegt dabei auf der axial verlaufenden Innenwand der Ausnehmung 123 auf und ist gegenüber dieser axial verschiebbar. Dazu weist das Anschlussstück 111 mehrere durchgehende Öffnungen 111a auf, die sich von der Aussenseite des Anschlussstücks 111 axial in Einschubrichtung zur Ausnehmung 123 erstrecken. Ein Betätigungsring 181 ist auf einer zylindrischen, mündungsseitigen Aussenfläche des Anschlussstücks 111 gelagert. Der Betätigungsring 181 weist entlang seines Umfangs mehrere beabstandete Betätigungsstifte 182 auf, welche sich durch die Öffnungen 111a erstrecken und in der in der Figur 1A dargestellten Anfangsstellung bis zum Rand der Ausnehmung 123 reichen, jedoch nicht in diese eindringen.

Der Querschnitt des Keilrings 127 verringert sich in Einschubrichtung, zudem weist der Keilring 127 sowohl auf der Innen- als auch auf der Aussenseite mehrere beabstandete, axial verlaufende Profilierungen auf. Die Profilierungen auf der Aussenseite wirken mit axial verlaufenden Profilierungen in der Ausnehmung 123 zusammen. Die Aussenkontur des Klemmrings 130 ist hinsichtlich des Keilwinkels und der Form der Profilierungen der Innenkontur des Keilrings 127 angepasst. Die Innenfläche des Klemmrings 130 ist derart geformt, dass sie den Aussenmantel des Rohrs 160 grossflächig kontaktieren kann, um zwischen dem Anschlussstück 111 und dem Rohr 160 eine Klemmwirkung zu erzeugen. Die Aussenmantelfläche des Klemmrings 130 definiert eine erste Auflagefläche zum Kontaktieren der Innenmantelfläche des Keilrings 127.

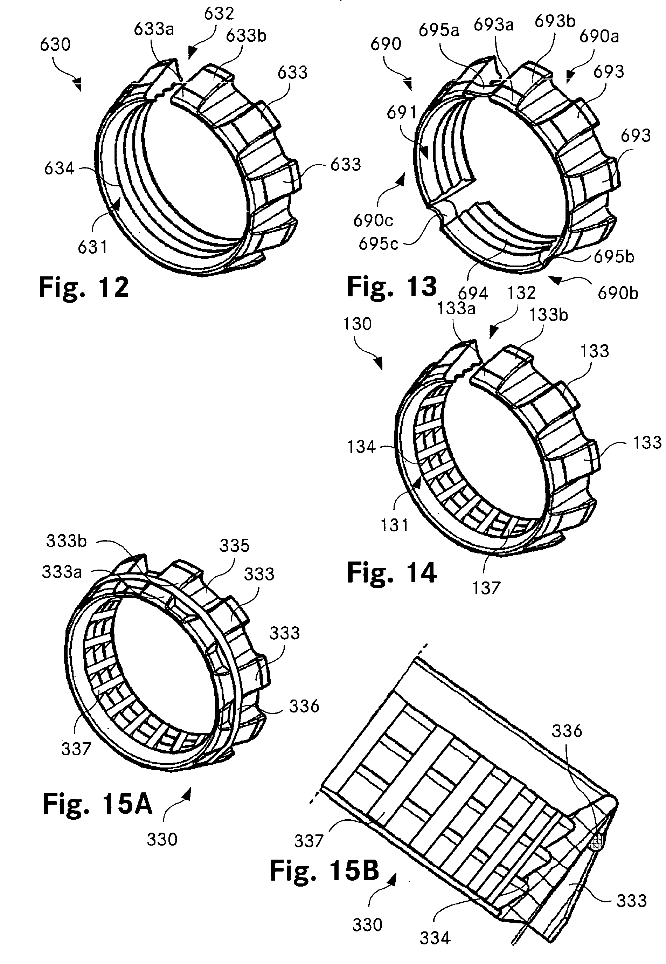

Die Innenmantelfläche des Klemmrings 130 zur Kontaktierung des Aussenmantels des Rohrs 160 weist eine Profilierung 131 mit vier in Ebenen senkrecht zur Rohrachse umlaufenden Klemmkanten sowie mit einer Reihe von senkrecht dazu verlaufenden, axialen Klemmkanten auf. Der Klemmring 130 ist weiter unten, im Zusammenhang mit der Figur 14 näher beschrieben. Die Grate der Klemmkanten definieren also eine zweite Auflagefläche zum Kontaktieren der Aussenseite des eingeschobenen Rohrs. In der Ausgangsstellung mit gegen die Einschubrichtung zurückgezogenem Keilring 127 ist der Innendurchmesser des Klemmrings 130 etwas grösser als der Aussendurchmesser des aufzunehmenden Rohrs. Der Winkel zwischen der ersten Auflagefläche und der zweiten Auflagefläche beträgt 11°. Der Winkel zwischen der Mantelfläche der sich nach hinten erweiternden Ausnehmung 123 und der Achse des Rohrs 160 beträgt 9°, ist also etwas kleiner. Der Klemmring 130 ist beispielsweise aus glasfaserverstärktem Polyamid (Glasfasergehalt 30 %) hergestellt und umfasst eine aufvulkanisierte Beschichtung aus einem thermoplastischen Elastomer (TPE).

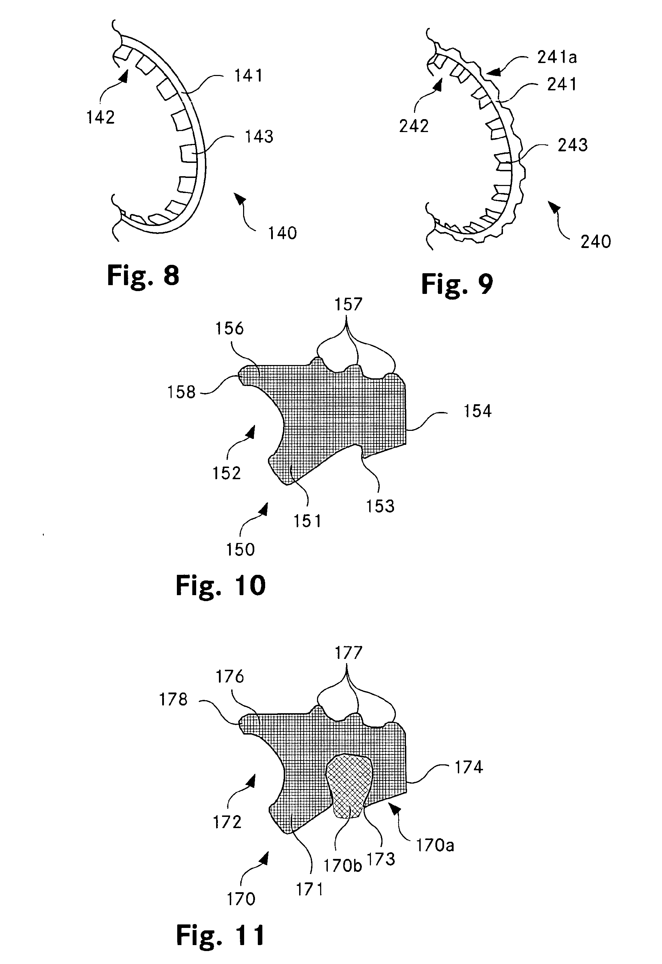

Hinten an den Klemmring 130 anschliessend ist ein Krallring 140 aus Federstahl angeordnet. Dieser weist einen äusseren ringförmigen Abschnitt 141 auf sowie einen an diesen Abschnitt 141 anschliessenden geschlitzten inneren Abschnitt 142. Der geschlitzte innere Abschnitt 142 weist eine Mehrzahl von beabstandeten Zähnen auf, die alle in einem Winkel von 45° vom äusseren Abschnitt 141 weggeknickt sind und somit schräg nach hinten (d. h. von der Mündung des Anschlussstücks 111 weg) weisen. Der Krallring 140 ist mit Bezug auf die Figur 8 näher beschrieben. Der Krallring 140 ist im Bereich des Knicks auf einem entsprechend ausgeformten Abschnitt des Anschlussstücks 111 geführt und dadurch in Bezug auf das einzuschiebende Rohr 160 zentriert.

Das Anschlussstück 111 bildet hinter dem Krallring 140 eine umlaufende, sich nach hinten verengende Ausnehmung 114, in welcher der innere Abschnitt des Krallrings 140 aufgenommen ist und welche Raum für eine weitere Verformung des inneren Abschnitts des Krallrings 140 bietet. An diese Ausnehmung 114 schliesst sich eine weitere Führungsfläche 115 an, deren Innendurchmesser dem Aussendurchmesser des aufzunehmenden Rohrs 160 entspricht.

Wiederum hinter der Führungsfläche 115 ist im Anschlussstück 111 eine weitere umlaufende Ausnehmung 116 mit ungefähr trapezförmigem Querschnitt ausgebildet, welche sich in Einschubrichtung erweitert. In dieser Ausnehmung 116 ist eine Lippendichtung 150 aus elastischem Material gehalten, wie sie in der Figur 10 oder 11 beschrieben ist.

An die Ausnehmung 116 für die Lippendichtung 150 schliesst sich im Anschlussstück 111 ein weiterer zylindrischer Abschnitt mit einer Führungsfläche 117 an. Am hinteren Ende dieser Führungsfläche 117 ist im Anschlussstück 111 ein als Stufe ausgebildeter Anschlag 118 für die Stirnseite des Rohrs 160 ausgebildet. Im Anschluss an diese Stufe entspricht der Innenquerschnitt des Anschlussstücks 111 dem Innenquerschnitt des Rohrs. Es wird somit durch das eingeschobene Rohr 160 und das Anschlussstück 111 ein Fluidkanal mit gleichbleibendem Querschnitt gebildet.

Das Anschlussstück 111 wird ausgehend von einem Rohrformling aus Silicium-Bronze hergestellt, indem dieser mit an sich bekannten Techniken aufgeweitet und umgeformt wird. Vor dem Formen des mündungsnächsten Teils liegt der Rohrformling in einer Konfiguration vor, in welcher sich der Krallring 140 und der Klemmring 130 von der Mündung her in die (noch nicht fertig ausgebildete) Aufnahme 123 einschieben lassen. Nach dem Einbringen dieser Teile erfolgt die Formung des mündungsnächsten Abschnitts, indem die zulaufende Aufnahme 123 und die zylindrische Führungsfläche 122 geschaffen werden.

Zum Schaffen einer Steckverbindung wird das Rohr 160 in die Mündung des Anschlussstücks eingeführt. Dabei kann es den Klemmring 130 im Wesentlichen ungehindert passieren, da dessen Innendurchmesser geringer ist als der Aussendurchmesser des Rohrs 160 und da dieser somit keine Kräfte auf das Rohr 160 übertragen kann. Anschliessend kontaktiert das Rohr 160 die freien Enden der inneren Abschnitte des Krallrings 140. Weil diese schräg in Einschubrichtung weisen, werden sie beim weiteren Einschieben elastisch verformt und behindern das Einschieben kaum. Ein Zurückziehen des von den Krallen erfassten Rohrs 160 ist aber nur noch mit ausserordentlichem Kraftaufwand möglich.

Beim weiteren Aufschieben des Rohrs 160 wird die Lippendichtung 150 leicht verformt und gegen die Mantelfläche der entsprechenden Ausnehmung 116 gedrückt. Das Einschieben des Rohrs 160 ist beendet, wenn die freie Stirnfläche des Rohrs 160 am Anschlag 118 des Anschlussstücks 111 anliegt. In der entsprechenden Lage ist das Rohr 160 durch die Führungsfläche 122 am vorderen Ende des Anschlussstücks 111, die mittlere Führungsfläche 115 und die Führungsfläche 118 im hintersten Bereich der Aufnahme für das Rohr 160 sicher gestützt.

Bis dahin lassen sich das Rohr 160 und das Anschlussstück 111 relativ zueinander verdrehen, so dass beispielsweise die Lage oder Orientierung des entsprechenden Leitungsstücks auch nach vollständigem Einschieben noch angepasst werden kann. Wird nun aber der Betätigungsring 181 in Einschubrichtung bewegt, so überträgt sich dessen Bewegung über die Betätigungsstifte 182 auf den Keilring 127. Die Betätigungsstifte 182 dringen in die Ausnehmung 123 ein und schieben den Keilring 127 axial nach innen. Dies führt aufgrund der Keilform dazu, dass der Klemmring 130 nach innen, auf die Rohraussenfläche zu bewegt wird und dass anschliessend aufgrund der Materialelastizität des Klemmrings 130 eine Klemmkraft auf das Rohr 160 aufgebaut wird. Das Zusammenwirken der axial verlaufenden Profilierungen der Ausnehmung 123, des Keilrings 127, des Klemmrings 130 sowie der axial verlaufenden Klemmkanten führt nun dazu, dass sich das Rohr 160 nicht mehr relativ zum Anschlussstück 111 verdrehen lässt. Die eingeschobene Stellung des Betätigungsrings 181 wird durch ein Einrasten von Raststiften 185 in entsprechenden hinterschnittenen Sacklöchern im Anschlussstück 111 gesichert. Die Abdichtung des Rohrs 160 gegenüber dem Anschlussstück 111 erfolgt auf der Rohraussenseite, durch die Lippendichtung 150. Die axiale Sicherung des eingeschobenen Rohrs 160 erfolgt primär durch den Krallring 140 unterstützt durch den Klemmring 130. Der Krallring 140 wird beim Versuch des Zurückziehens vom Rohr 160 mitgenommen und die inneren Abschnitte werden entsprechend umgebogen, so dass die Andruckkraft der Krallen verstärkt wird. Die Rückzugsbewegung des Rohrs 160 wird zudem über den Krallring 140 auf den Klemmring 130 übertragen. Aufgrund der unterschiedlichen Winkel zwischen der Auflagefläche zum Kontaktieren der Mantelfläche der Ausnehmung 123 bzw. der Mantelfläche der sich nach hinten erweiternden Ausnehmung 123 und der Achse des Rohrs 160 kann die hinterste Klemmkante der Profilierung 131 sofort in Eingriff mit der Rohraussenseite gelangen und auf diese unmittelbar einen hohen Pressdruck ausüben. Sollte ein weiteres Zurückziehen des Rohrs 160 noch möglich sein, gelangt der Klemmring 130 mit seiner gesamten Aussenmantelfläche in Kontakt mit der Mantelfläche der Ausnehmung 123 und wirkt mit allen vier Klemmkanten auf die Rohraussenfläche. Aufgrund der Konizität der Ausnehmung 123 verkeilt sich der Klemmring 130 in dieser und verhindert somit zuverlässig ein weiteres Zurückziehen.

Der Aufnahmeraum 123, in welchem unter anderem der metallische Krallring 140 aufgenommen ist, wird bei eingeschobenem Rohr 160 durch den O-Ring 125 nach aussen abgedichtet. Vor dem Einschieben des Rohrs 160 möglicherweise im Aufnahmeraum 123 befindliche Feuchtigkeit wird durch das Rotgussmaterial des Anschlussstücks 111 gebunden; das Eindringen von weiterer Feuchtigkeit ist durch die Abdichtung verhindert. Dadurch kann die Korrosion des Krallrings 140 minimiert werden.

Der zur Abdichtung des Aufnahmeraums 123 verwendete O-Ring 125 kann auch durch eine Form- bzw. Lippendichtung ersetzt werden. Deren Form kann ungefähr derjenigen der Lippendichtung 150 entsprechen, sie ist aber allenfalls kleiner ausgebildet. Eine entsprechende Lippendichtung wäre aber um eine zur Rohrachse senkrechten Ebene spiegelbildlich zur Lippendichtung 150 im Anschlussstück 111 angeordnet.

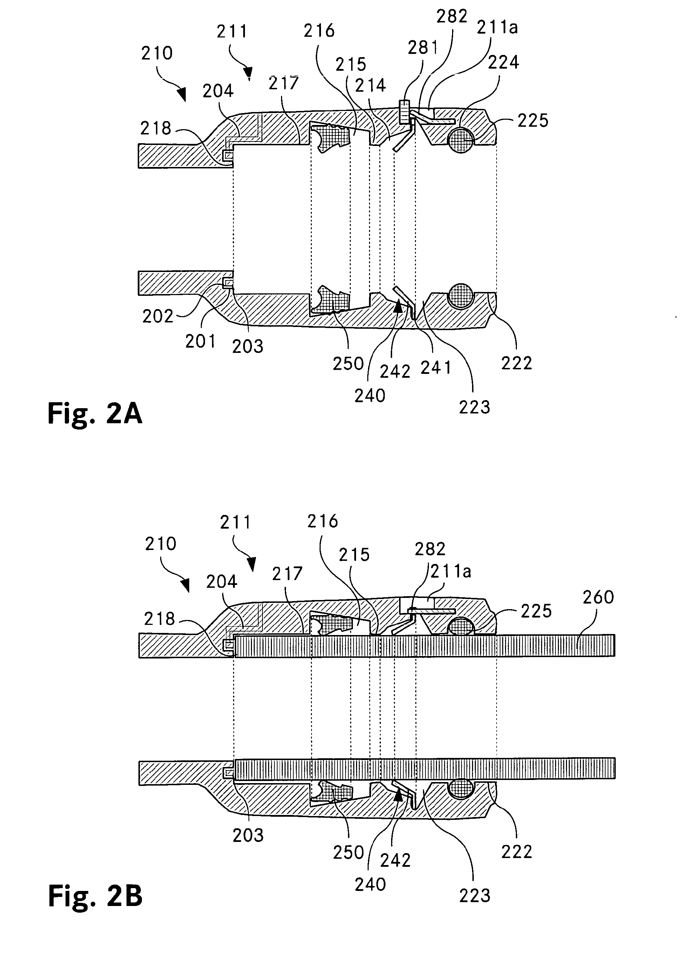

Die Figuren 2A, 2B zeigen eine zweite Ausführungsform eines erfindungsgemässen Anschlussstücks im Querschnitt. In Figur 2A ist die Situation vor dem Einschieben eines Rohrs dargestellt, die Figur 2B zeigt die Situation nach dem Einschieben des Rohrs und dem Aktivieren der Verdrehsicherung. Dargestellt ist ein Bauelement 210 (z. B. Fitting, Armatur etc.) mit einem Anschlussstück 211, welches zur Aufnahme eines Endes eines Metakkrohrs 260 (z. B. aus Edelstahl) geeignet ist. Das Anschlüssstück 211 ist mit dem Bauelement 210 einstückig aus Rotguss hergestellt.

Das Anschlussstück 211 ist im Wesentlichen zylindrisch und bildet in seinem vordersten, mündungsnächsten Abschnitt eine erste zylindrische Führungsfläche 222 für das Rohr. In der zylindrischen Führungsfläche 222 ist eine umlaufende Ausnehmung 224 mit ungefähr halbrundem Querschnitt ausgespart, in welcher ein O-Ring 225 aufgenommen ist. Anschliessend an die Führungsfläche 222 ist eine ringförmige Ausnehmung 223 ausgebildet, deren mündungsnahe Wand sich nach hinten schräg erweitert, während die mündungsferne Wand der Ausnehmung 223 in einem radial äusseren Bereich senkrecht zur Achse des Anschlussstücks 211 steht. In der Ausnehmung 223 ist ein Krallring 240 gehalten. Der Krallring 240 weist einen äusseren ringförmigen Abschnitt 241 auf sowie einen an diesen Abschnitt 241 anschliessenden geschlitzten inneren Abschnitt 242. Der geschlitzte innere Abschnitt 242 weist eine Mehrzahl von beabstandeten Zähnen auf, die alle in einem Winkel von 45° vom äusseren Abschnitt 241 weggeknickt sind und somit schräg nach hinten (d. h. von der Mündung des Anschlussstücks 211 weg) weisen. Entlang des Aussenumfangs des äusseren ringförmigen Abschnitts 241 weist der Krallring 240 eng benachbart angeordnete Ausnehmungen auf. Der Krallring 240 ist weiter unten, im Zusammenhang mit der Figur 9 näher beschrieben. Der Krallring 240 ist im Bereich des Knicks auf einem entsprechend ausgeformten Abschnitt der mündungsfernen Wandung der Ausnehmung 223 geführt und dadurch in Bezug auf das einzuschiebende Rohr 260 zentriert.

Das Anschlussstück 211 bildet hinter dem Krallring 240 eine umlaufende, sich nach hinten verengende Ausnehmung 214, in welcher der innere Abschnitt 242 des Krallrings 240 aufgenommen ist und welche Raum für eine weitere Verformung des inneren Abschnitts 242 des Krallrings 240 bietet. An diese Ausnehmung 214 schliesst sich eine weitere zylindrische Führungsfläche 215 an, deren Innendurchmesser dem Aussendurchmesser des aufzunehmenden Rohrs 260 entspricht.

An einer Stelle entlang des Umfangs des Anschlussstücks 211 ist eine Öffnung 211a ausgeführt, welche von der Aussenseite des Anschlussstücks 211 bis zur Ausnehmung 223 reicht. Ein Sektor des Krallrings 240 verläuft durch diese Öffnung 211a hindurch. Die Öffnung 211 a umfasst einen Hauptteil und eine von diesem axial in Mündungsrichtung laufende Aufnahme, in welcher ein Ende einer Blattfeder 282 aufgenommen ist. Das entgegengesetzte, freie Ende der Blattfeder 282 verläuft in den Hauptteil der Öffnung 211a hinein und ist dort in der Ausgangsposition durch einen Splint 281 in einer nach oben zurückgebogenen Position vorgespannt, so dass das freie Ende der Blattfeder 282 nicht mit dem Krallring 240 zusammenwirkt, womit dieser grundsätzlich um die Achse der Rohraufnahme drehbar ist.

Wiederum hinter der Führungsfläche 215 ist im Anschlussstück 211 eine weitere umlaufende Ausnehmung 216 mit ungefähr trapezförmigem Querschnitt ausgebildet, welche sich in Einschubrichtung erweitert. In dieser Ausnehmung 216 ist eine Lippendichtung 250 aus elastischem Material mit ungefähr V-förmigem Querschnitt gehalten. Geeignete Lippendichtungen sind weiter unten, im Zusammenhang mit den Figuren 10 und 11 näher beschrieben.

An die Ausnehmung 216 für die Lippendichtung 250 schliesst sich im Anschlussstück 211 ein weiterer zylindrischer Abschnitt mit einer Führungsfläche 217 an. Am hinteren Ende dieser Führungsfläche 217 ist im Anschlussstück 211 ein als Stufe ausgebildeter Anschlag 218 für die Stirnseite des Rohrs 260 ausgebildet. Im Anschluss an diese Stufe entspricht der Innenquerschnitt des Anschlussstücks 211 dem Innenquerschnitt des Rohrs. Es wird somit durch das eingeschobene Rohr 260 und das Anschlussstück 211 ein Fluidkanal mit gleichbleibendem Querschnitt gebildet.

In der Stirnwand, welche den Anschlag 218 bildet, ist ein umlaufender Ringkanal 201 ausgebildet. In diesen ist eine Isolationsschicht 202 eingebracht, welche einen leitenden Kontaktring 203 umschliesst. Der Kontaktring 203 ragt geringfügig über die Stirnwand heraus und kann durch eine Durchführung 204 im Anschlussstück 211 von aussen kontaktiert werden.

Der Steckverbinder wird zusammengesetzt, indem zunächst die Lippendichtung 250 in die entsprechende Ausnehmung 216 im Anschlussstück 211 eingesetzt wird. Aufgrund der Elastizität der Lippendichtung 250 gelingt dies problemlos. Anschliessend wird der Krallring 240 von vorne durch die Mündung des Anschlussstücks 211 eingebracht. Dies wird durch die Elastizität dieses Bauteils ermöglicht.

Zum Schaffen einer Steckverbindung wird das Rohr 260 in die Mündung des Anschlussstücks 211 eingeführt. Als erstes passiert das Rohr 260 den O-Ring 225, dann gelangt das Rohr 260 in Kontakt mit den freien Enden der inneren Abschnitte 242 des Krallrings 240. Weil diese schräg in Einschubrichtung weisen, werden sie beim weiteren Einschieben elastisch verformt und behindern das Einschieben kaum. Ein Zurückziehen des von den Krallen erfassten Rohrs 260 ist aber nur noch mit ausserordentlichem Kraftaufwand möglich.

Beim weiteren Aufschieben des Rohrs 260 wird die Lippendichtung 250 leicht verformt und gegen die Mantelfläche der entsprechenden Ausnehmung 216 gedrückt. Das Einschieben des Rohrs 260 ist beendet, wenn die freie Stirnfläche des Rohrs 260 am Anschlag 218 des Anschlussstücks 211 anliegt. In der entsprechenden Lage ist das Rohr 260 durch die Führungsfläche 222 am vorderen Ende des Anschlussstücks 211, die mittlere Führungsfläche 215 und die Führungsfläche 218 im hintersten Bereich der Aufnahme für das Rohr 260 sicher gestützt.

Bis dahin lassen sich das Rohr 260 und das Anschlussstück 211 relativ zueinander verdrehen, so dass beispielsweise die Lage oder Orientierung des entsprechenden Leitungsstücks noch angepasst werden kann. Wird nun aber der Splint 281 radial nach aussen gezogen und aus der Öffnung 211 entfernt, wird die Blattfeder 282 freigegeben, worauf sie sich entspannt und dabei in die Profilierung am Aussenumfang des Krallrings 240 eingreift. Dieser lässt sich fortan nicht mehr bezüglich des Anschlussstücks 211 verdrehen. Aufgrund der Formgebung der Zähne des Krallrings 240 wird dadurch auch ein Verdrehen des aufgenommenen Rohrs 260 verhindert.

Die Abdichtung des Rohrs 260 gegenüber dem Anschlussstück 211 erfolgt auf der Rohraussenseite, durch die Lippendichtung 250. Die axiale Sicherung des eingeschobenen Rohrs 260 erfolgt durch den Krallring 240. Der Krallring 240 verformt sich beim Versuch des Zurückziehens derart, dass die Haltekraft stark vergrössert wird. Da auf ein Metallrohr 260 hohe Kräfte übertragbar sind, ohne dass dieses dadurch beschädigt wird, kann der Krallring zur axialen Sicherung ausreichen.

Der Aufnahmeraum 223, in welchem der metallische Krallring 240 aufgenommen ist, wird bei eingeschobenem Rohr 260 durch den O-Ring 225 weitgehend nach aussen abgedichtet. Zusätzlich wird die Öffnung 211a mit Vorteil durch einen Dichtstopfen verschlossen. Vor dem Einschieben des Rohrs 260 möglicherweise im Aufnahmeraum 223 befindliche Feuchtigkeit wird durch das Rotgussmaterial des Anschlussstücks 211 gebunden; das Eindringen von weiterer Feuchtigkeit ist durch die Abdichtung verhindert. Dadurch kann die Korrosion des Krallrings 240 minimiert werden.

Mit Hilfe des Kontaktrings 203 lässt sich der vollständige Einschub des Rohrs 260 durch Messungen feststellen: So ist es beispielsweise möglich, den elektrischen Widerstand zwischen dem Kontaktring 203 und dem Anschlussstück 211 zu messen. Besteht eine Verbindung über das metallische Rohr 260 ist dieser bedeutend geringer als vor dem vollständigen Einschieben des Rohrs. Alternativ oder zusätzlich ist eine kapazitive Messung möglich, da die Kapazität zwischen dem Kontaktring 203 und dem Rohr 260 vom Abstand dieser Komponenten abhängig ist. Die Messung lässt sich insbesondere mit einem Messgerät durchführen, welches die Durchführung 204 und das Anschlussstück 211 kontaktiert. Das Messgerät kann Teil eines Werkzeugs sein, welches beispielsweise zum Ablängen des Rohrs 260 verwendet wird.

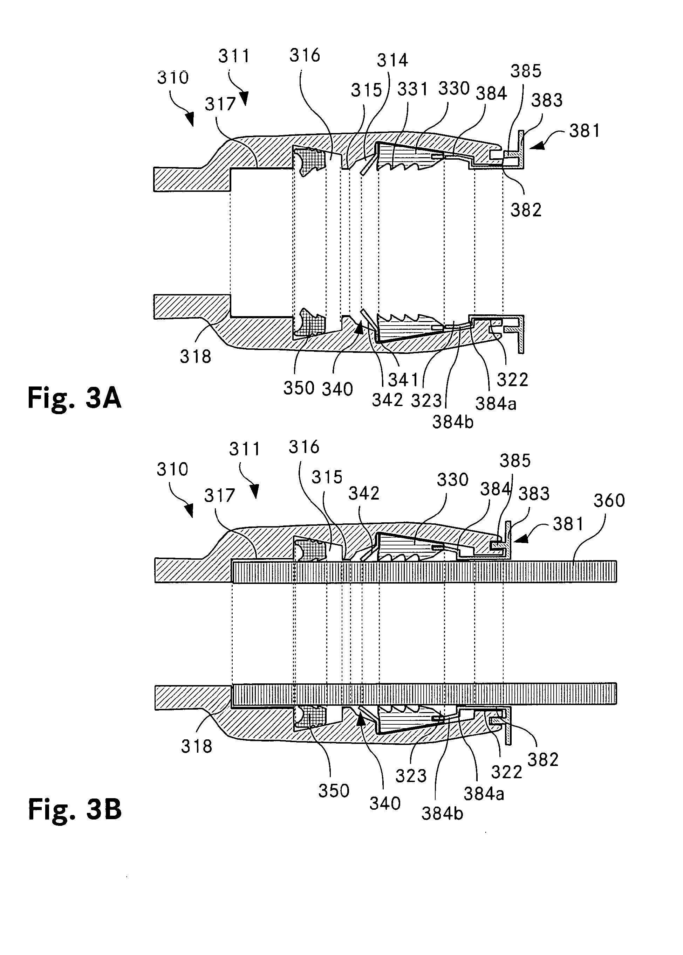

Die Figuren 3A, 3B zeigen eine dritte Ausführungsform eines erfindungsgemässen Anschlussstücks. Die Figur 3A zeigt das Anschlussstück mit einer deaktivierten Verdrehsicherung, in der Figur 3B ist das Anschlussstück mit aktivierter Verdrehsicherung dargestellt.

Dargestellt ist ein Bauelement 310 (z. B. Fitting, Armatur etc.) mit einem Anschlussstück 311, welches zur Aufnahme eines Endes eines Metallrohrs (z. B. aus Edelstahl) geeignet ist. Das Anschlussstück 311 ist mit dem Bauelement 310 einstückig aus Rotguss hergestellt.

Das Anschlussstück 311 ist an seinem vorderen Teil, auf sein freies Ende hin, zulaufend ausgebildet und hat in einem vorderen Abschnitt einen Innenquerschnitt, der dem Aussenquerschnitt des aufzunehmenden Rohrs entspricht. Das Anschlussstück 311 bildet in diesem Abschnitt somit eine zylindrische Führungsfläche 322 für das Rohr.

Das Anschlussstück 311 weist in seinem vorderen Teil, nahe seines freien Endes, weiter eine ringförmige Ausnehmung 323 mit ungefähr trapezförmigem Querschnitt auf, welche sich in Einschubrichtung erweitert. In dieser Ausnehmung 323 ist ein Klemmring 330 gehalten, welcher beispielsweise der in der Figur 14 gezeigten Ausführung entsprechen kann. Seine Aussenkontur entspricht im Wesentlichen dem Innenquerschnitt eines axialen Bereichs der Ausnehmung 323. Die Innenfläche des Klemmrings 330 ist derart geformt, dass sie den Aussenmantel des Rohrs grossflächig kontaktieren kann, um zwischen dem Anschlussstück 311 und dem Rohr eine Klemmwirkung zu erzeugen. Die Aussenmantelfläche des Klemmrings 330 definiert eine erste Auflagefläche zum Kontaktieren einer Mantelfläche der sich nach hinten erweiternden Ausnehmung 323.

Die Innenmantelfläche des Klemmrings 330 zur Kontaktierung des Aussenmantels des Rohrs weist eine Profilierung 331 mit vier in Ebenen senkrecht zur Rohrachse umlaufenden Klemmkanten sowie mit einer Reihe von senkrecht dazu verlaufenden, axialen Klemmkanten auf. Die Grate der Klemmkanten definieren also eine zweite Auflagefläche zum Kontaktieren der Aussenseite des eingeschobenen Rohrs. Der Winkel zwischen der ersten Auflagefläche und der zweiten Auflagefläche beträgt 11°. Der Winkel zwischen der Mantelfläche der sich nach hinten erweiternden Ausnehmung 323 und der Achse des Rohrs 360 beträgt 9°, ist also etwas kleiner.

Hinten an den Klemmring330 anschliessend ist ein Krallring 340 aus Federstahl mit einer Stärke von 0.45 mm angeordnet. Dieser weist einen äusseren ringförmigen Abschnitt 341 auf sowie einen an diesen Abschnitt 341 anschliessenden geschlitzten inneren Abschnitt 342. Der geschlitzte innere Abschnitt 342 weist eine Mehrzahl von beabstandeten Zähnen auf, die alle in einem Winkel von 45° vom äusseren Abschnitt 341 weggeknickt sind und somit schräg nach hinten (d. h. von der Mündung des Anschlussstücks 311 weg) weisen. Ein geeigneter Krallring ist mit Bezug auf die Figur 8 näher beschrieben. Der Krallring 340 ist im Bereich des Knicks auf einem entsprechend ausgeformten Abschnitt des Anschlussstücks 311 geführt und dadurch in Bezug auf das einzuschiebende Rohr zentriert. Das Anschlussstück 311 bildet hinter dem Krallring 340 eine umlaufende, sich nach hinten verengende Ausnehmung 314, in welcher der innere Abschnitt 342 des Krallrings 340 aufgenommen ist und welche Raum für eine weitere Verformung des inneren Abschnitts 342 des Krallrings 340 bietet. An diese Ausnehmung 314 schliesst sich eine weitere zylindrische Führungsfläche 315 an, deren Innendurchmesser dem Aussendurchmesser des aufzunehmenden Rohrs entspricht.

Wiederum hinter der Führungsfläche 315 ist im Anschlussstück 311 eine weitere umlaufende Ausnehmung 316 mit ungefähr trapezförmigem Querschnitt ausgebildet, welche sich in Einschubrichtung erweitert. In dieser Ausnehmung 316 ist eine Lippendichtung 350 aus elastischem Material mit ungefähr V-förmigem Querschnitt gehalten. Die Lippendichtung 350 ist weiter unten, im Zusammenhang mit der Figur 10 bzw. 11 näher beschrieben.

An die Ausnehmung 316 für die Lippendichtung 350 schliesst sich im Anschlussstück 311 ein weiterer zylindrischer Abschnitt mit einer Führungsfläche 317 an. Am hinteren Ende dieser Führungsfläche 317 ist im Anschlussstück 31 ein als Stufe ausgebildeter Anschlag 318 für die Stirnseite des Rohrs ausgebildet. Im Anschluss an diese Stufe entspricht der Innenquerschnitt des Anschlussstücks 311 dem Innenquerschnitt des Rohrs. Es wird somit durch das eingeschobene Rohr und das Anschlussstück 311 ein Fluidkanal mit gleichbleibendem Querschnitt gebildet.

Der Steckverbinder wird zusammengesetzt, indem zunächst die Lippendichtung 350 in die entsprechende Ausnehmung 316 im Anschlussstück 311 eingesetzt wird. Aufgrund der Elastizität der Lippendichtung 350 gelingt dies problemlos. Anschliessend werden der Krallring 340 und der Klemmring 330 von vorne durch die Mündung des Anschlussstücks 311 eingebracht. Dies wird durch die Formgebung und die Elastizität dieser Bauteile ermöglicht.

Im Anschlussstück 311 gemäss der dritten Ausführungsform wird nun die Einstecköffnung des Anschlussstücks 311 von einem Betätigungsring 381 umgeben. Dieser weist einen zylindrischen Abschnitt 382 auf, welcher an der mündungsnächsten Führungsfläche 322 gelagert ist, entsprechend ist der Innendurchmesser des Anschlussstücks 311 im Bereich dieser Führungsfläche 322 um die doppelte Materialdicke des zylindrischen Abschnitts 382 des Betätigungsrings 381 erweitert. Die eigentliche, mit dem Mantel des Rohrs zusammenwirkende Führungsfläche 322 ist also von der Innenfläche des zylindrischen Abschnitts 382 des Betätigungsrings 381 gebildet. Aussen an den zylindrischen Abschnitt 382 schliesst sich ein Betätigungsflansch 383 an, welcher radial nach aussen weist.

Innen an den zylindrischen Abschnitt 382 schliessen sich entlang des Umfangs mehrere beabstandete innere Sperrstifte 384 an. Analog dazu sind auch innen am Betätigungsflansch 383 mehrere äussere Sperrstifte 385 angeformt. Die inneren Sperrstifte 384 umfassen einen radial nach aussen weisenden Verbindungsabschnitt 384a welcher in einen Endabschnitt 384b übergeht, der zunächst schräg, parallel zur Innenfläche der Ausnehmung 323 verläuft und anschliessend abgeknickt ist, so dass er im Bereich seines freien Endes parallel zur Achse des Anschlussstücks 311 gerichtet ist. Die äusseren Sperrstifte 385 sind gerade und verlaufen parallel zur Achse des Anschlussstücks 311. Im Klemmring 330 und in der Stirnfläche des Anschlussstücks 311 sind mehrere beabstandete Sacklöcher ausgebildet, die den geraden, achsparallelen Abschnitt der inneren Sperrstifte 384 bzw. die äusseren Sperrstifte 385 aufnehmen können. Die Sacklöcher im Klemmring 330 haben dabei einen rechteckigen Querschnitt, deren radiale Höhe ist grösser als deren Breite. Dies ermöglicht ein Einführen der inneren Sperrstifte 384 auch dann, wenn der Klemmring 330 bereits etwas gegen die Einschubrichtung zurück verschoben wurde.

Zum Schaffen einer Steckverbindung wird das Rohr 360 in die Mündung des Anschlussstücks 311 eingeführt. Dieser Vorgang wird durch die im Bereich der Mündung ausgebildete Anfasung unterstützt. Als Nächstes gelangt das Rohr 360 in Kontakt mit den Klemmkanten (Profilierung 331) des Klemmrings 330. Durch eine Anfasung im Bereich des mündungsseitigen Endes des Klemmrings 330 erfolgt eine Zentrierung des Klemmrings 330 in Bezug auf das Rohr und die Ausnehmung 323 im Anschlussstück 311. Der in der Ausnehmung 323 aufgenommene Klemmring 330 wird bei Bedarf soweit mitgenommen (und gleichzeitig aufgeweitet), bis das Rohr ihn passieren kann. Anschliessend kontaktiert das Rohr die freien Enden der inneren Abschnitte 342 des Krallrings 340. Weil diese schräg in Einschubrichtung weisen, werden sie beim weiteren Einschieben elastisch verformt und behindern das Einschieben kaum. Ein Zurückziehen des von den Krallen erfassten Rohrs 360 ist aber nur noch mit ausserordentlichem Kraftaufwand möglich.

Beim weiteren Aufschieben des Rohrs 360 wird die Lippendichtung 350 leicht verformt und gegen die Mantelfläche der entsprechenden Ausnehmung 316 gedrückt. Das Einschieben des Rohrs ist beendet, wenn die freie Stirnfläche des Rohrs am Anschlag 318 des Anschlussstücks 311 anliegt. In der entsprechenden Lage ist das Rohr 360 durch die Führungsfläche 322 am vorderen Ende des Anschlussstücks 311, die mittlere Führungsfläche 315 und die Führungsfläche 317 im hintersten Bereich der Aufnahme für das Rohr 360 sicher gestützt. Die Abdichtung des Rohrs 360 gegenüber dem Anschlussstück 311 erfolgt auf der Rohraussenseite, durch die Lippendichtung 350.

Vor und während dem Einschieben des Rohrs 360 befindet sich der Betätigungsring 381 in der in der Figur 3A dargestellten herausgezogenen Position. Der Klemmring 330 und damit das eingeschobene Rohr 360 sind gegenüber dem Anschlussstück 311 um ihre gemeinsame Symmetrieachse drehbar. Die Verdrehbarkeit kann unterstützt werden durch eine Gleitbeschichtung (z. B. mit PTFE) auf der Aussenmantelfläche des Klemmrings 330. Um in der Endposition das Rohr 360 und das Anschlussstück 311 gegen eine weitere relative Verdrehung zu sichern, wird nun der Betätigungsring 381 mit Hilfe des Betätigungsflansches 383 nach innen geschoben. Wenn die Ausrichtung der Sperrstifte 384, 385 zu den Sacklöchern nicht auf Anhieb stimmt, müssen das Anschlussstück 311 und das Rohr 360 relativ zueinander verdreht werden. Der Abstand der Sacklöcher ist aber so klein gewählt, dass eine geringe Verdrehung ausreicht, damit der Betätigungsring 381 eingerastet werden kann. Sobald die Sperrstifte 384, 385 sowohl innen als auch aussen in die entsprechenden Sacklöcher eingeführt sind, ist der Klemmring 330 gegenüber dem Anschlussstück gegen ein Verdrehen gesichert. Da der Klemmring 330 so ausgebildet ist, dass er das Rohr 360 kraftschlüssig auch gegen ein Verdrehen hält, ist somit eine Verdrehsicherung zwischen dem Rohr 360 und dem Anschlussstück 311 geschaffen.

Zwischen dem Betätigungsflansch 383 und der Stirnfläche des Anschlussstücks 311 kann zu Beginn ein entfernbarer Sperring, z. B. aus Kunststoff, eingebracht sein, welcher ein unbeabsichtigtes Einschieben des Betätigungsrings 381 verhindert. Die äusseren Sperrstifte 385 können an ihrem freien Ende einen widerhakenartigen Abschnitt aufweisen, welcher hinter einem Hinterschnitt im entsprechenden Sackloch einrastet, so dass der Betätigungsring 381 nicht ohne weiteres wieder herausgezogen werden kann.

Der in der Figur 3 gezeigte Steckverbinder ist beispielsweise auf Rohre mit einem Aussendurchmesser von 50 mm ausgerichtet. Die Einstecktiefe für das Rohr beträgt in diesem Fall 45 mm, die axiale Ausdehnung der hinteren Führungsfläche 317 12 mm, diejenige der vorderen Führungsfläche 322 5 mm. Die mittlere Führungsfläche 315 vergrössert die Gesamtführung um weitere 2 mm. An der Aussenfläche des Anschlussstücks ist auf der Höhe des Anschlags 318 eine Markierung angebracht. Der Anwender kann somit vor dem Einschieben mit Hilfe des Anschlussstücks 311 oder einer passenden Lehre eine Markierung auf dem Rohr anbringen und nach erfolgtem Einschieben feststellen, ob das Rohr ganz eingeschoben ist.

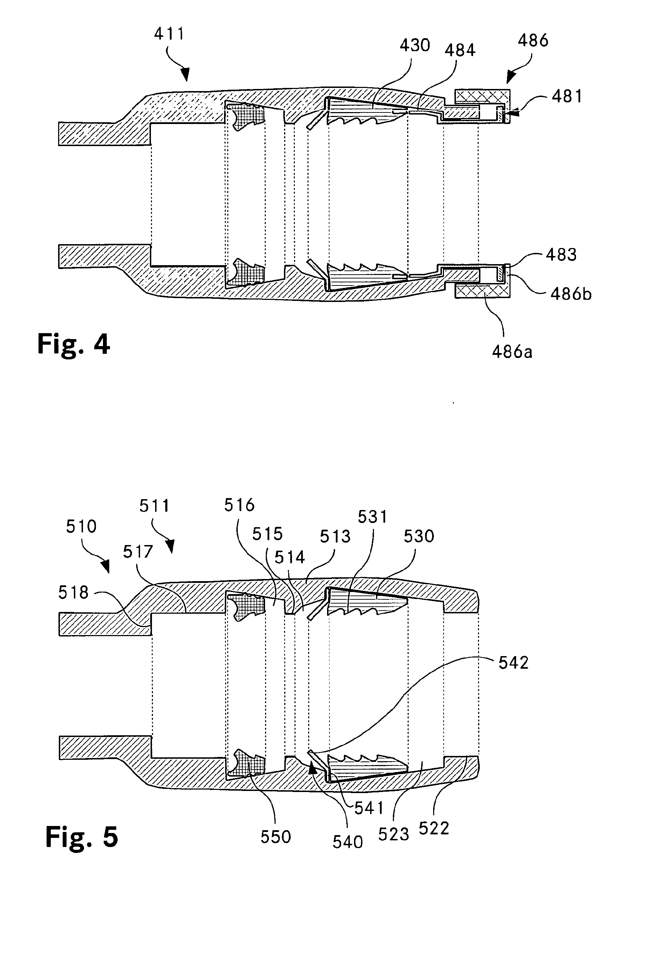

Die Figur 4 zeigt eine vierte Ausführungsform eines erfindungsgemässen Anschlussstücks. Es handelt sich dabei um eine Abwandlung der dritten Ausführungsform gemäss den Figuren 3A, 3B. Im Unterschied zu dieser Ausführungsform ist der aus dem Anschlussteil 411 ragende Teil des Betätigungsrings 481 von einer Schraubhülse 486 umgeben, die einen Hauptteil 486a mit einem Innengewinde sowie einen stirnseitigen, nach innen gerichteten Flansch 486b aufweist. Das Innengewinde des Hauptteils 486a wirkt mit einem Aussengewinde auf der Aussenseite des Anschlussstücks 411 zusammen, so dass die Schraubhülse 486 durch Drehen um ihre Achse auf das Anschlussstück 411 zu bzw. von diesem weg bewegt werden kann. Beim Festziehen der Schraubhülse 486 wirkt der Flansch 486b derart auf den Betätigungsflansch 483 des Betätigungsrings 481, dass dieser mitgenommen und axial in das Anschlussteil 411 bewegt wird. Da zwischen dem Flansch 483 der Schraubhülse 486 und dem Betätigungsflansch 483 aufgrund von Reibungskräften zumindest teilweise auch Drehbewegungen übertragen werden, wird der Sperrstift 484 nach dem Kontaktieren des Klemmrings 430 solange mitgenommen, bis ein Sackloch im Klemmring 430 erreicht ist. Die Verdrehsicherung erfolgt schliesslich durch Reibschluss zwischen dem Flansch 486b der Schraubhülse 486, dem Betätigungsflansch 483 des Betätigungsrings 481 und der Stirnfläche des Anschlussstücks 411. Alternativ sind auch bei dieser Ausführungsform äussere Sperrstifte vorhanden, die in Sacklöcher im Anschlussstück eingeführt werden.

Die Figur 5 zeigt einen Querschnitt einer fünften Ausführungsform eines erfindungsgemässen Anschlussstücks vor dem Einschieben eines Rohrendes. Dargestellt ist ein Bauelement 510 (z. B. Fitting, Armatur etc.) mit einem Anschlussstück 511, welches zur Aufnahme eines Endes eines Metallrohrs (z. B. aus Edelstahl) geeignet ist. Das Anschlussstück 511 ist mit dem Bauelement 510 einstückig aus Rotguss hergestellt.

Das Anschlussstück 511 ist an seinem vorderen Teil, auf sein freies Ende hin, zulaufend ausgebildet und hat in einem vorderen Abschnitt einen Innenquerschnitt, der dem Aussenquerschnitt des aufzunehmenden Rohrs entspricht. Das Anschlussstück 511 bildet in diesem Abschnitt somit eine zylindrische Führungsfläche 522 für das Rohr.

Das Anschlussstück 511 weist in seinem vorderen Teil, nahe seines freien Endes, weiter eine ringförmige Ausnehmung 523 mit ungefähr trapezförmigem Querschnitt auf, welche sich in Einschubrichtung erweitert. In dieser Ausnehmung 523 ist ein Klemmring 530 gehalten. Ein geeigneter Klemmring ist weiter unten, im Zusammenhang mit der Figur 14 näher beschrieben. Seine Aussenkontur entspricht im Wesentlichen dem Innenquerschnitt eines axialen Bereichs der Ausnehmung 523. Die Innenfläche des Klemmrings 530 ist derart geformt, dass sie den Aussenmantel des Rohrs grossflächig kontaktieren kann, um zwischen dem Anschlussstück 511 und dem Rohr eine Klemmwirkung zu erzeugen. Die Aussenmantelfläche des Klemmrings 530 definiert eine erste Auflagefläche zum Kontaktieren einer Mantelfläche der sich nach hinten erweiternden Ausnehmung 523.

Die Innenmantelfläche des Klemmrings 530 zur Kontaktierung des Aussenmantels des Rohrs weist eine Profilierung 531 mit vier in Ebenen senkrecht zur Rohrachse umlaufenden Klemmkanten sowie mit einer Reihe von senkrecht dazu verlaufenden, axialen Klemmkanten auf. Die Grate der Klemmkanten definieren also eine zweite Auflagefläche zum Kontaktieren der Aussenseite des eingeschobenen Rohrs. Der Winkel zwischen der ersten Auflagefläche und der zweiten Auflagefläche beträgt 11°. Der Winkel zwischen der Mantelfläche der sich nach hinten erweiternden Ausnehmung 523 und der Achse des Rohrs beträgt 9°, ist also etwas kleiner.

Hinten an den Klemmring 530 anschliessend ist ein Krallring 540 aus Federstahl mit einer Stärke von 0.45 mm angeordnet. Dieser weist einen äusseren ringförmigen Abschnitt 541 auf sowie einen an diesen Abschnitt 541 anschliessenden geschlitzten inneren Abschnitt 542. Der geschlitzte innere Abschnitt 542 weist eine Mehrzahl von beabstandeten Zähnen auf, die alle in einem Winkel von 45° vom äusseren Abschnitt 541 weggeknickt sind und somit schräg nach hinten (d. h. von der Mündung des Anschlussstücks 511 weg) weisen. Ein geeigneter Krallring ist mit Bezug auf die Figur 8 näher beschrieben. Der Krallring 540 ist im Bereich des Knicks auf einem entsprechend ausgeformten Abschnitt des Anschlussstücks 511 geführt und dadurch in Bezug auf das einzuschiebende Rohr zentriert. Das Anschlussstück 511 bildet hinter dem Krallring 540 eine umlaufende, sich nach hinten verengende Ausnehmung 514, in welcher der innere Abschnitt 542 des Krallrings 540 aufgenommen ist und welche Raum für eine weitere Verformung des inneren Abschnitts 542 des Krallrings 540 bietet. An diese Ausnehmung 514 schliesst sich eine weitere zylindrische Führungsfläche 515 an, deren Innendurchmesser dem Aussendurchmesser des aufzunehmenden Rohrs entspricht.

Wiederum hinter der Führungsfläche 515 ist im Anschlussstück 511 eine weitere umlaufende Ausnehmung 516 mit ungefähr trapezförmigem Querschnitt ausgebildet, welche sich in Einschubrichtung erweitert. In dieser Ausnehmung 516 ist eine Lippendichtung 550 aus elastischem Material mit ungefähr V-förmigem Querschnitt gehalten. Die Lippendichtung 550 ist weiter unten, im Zusammenhang mit der Figur 10 bzw. 11 näher beschrieben.

An die Ausnehmung 516 für die Lippendichtung 550 schliesst sich im Anschlussstück 511 ein weiterer zylindrischer Abschnitt mit einer Führungsfläche 517 an. Am hinteren Ende dieser Führungsfläche 517 ist im Anschlussstück 511 ein als Stufe ausgebildeter Anschlag 518 für die Stirnseite des Rohrs ausgebildet. Im Anschluss an diese Stufe entspricht der Innenquerschnitt des Anschlussstücks 511 dem Innenquerschnitt des Rohrs. Es wird somit durch das eingeschobene Rohr und das Anschlussstück 511 ein Fluidkanal mit gleichbleibendem Querschnitt gebildet.

Der Steckverbinder wird zusammengesetzt, indem zunächst die Lippendichtung 550 in die entsprechende Ausnehmung 516 im Anschlussstück 511 eingesetzt wird. Aufgrund der Elastizität der Lippendichtung 550 gelingt dies problemlos. Anschliessend werden der Krallring 540 und der Klemmring 530 von vorne durch die Mündung des Anschlussstücks 511 eingebracht. Dies wird durch die Elastizität dieser Bauteile ermöglicht.,

Zum Schaffen einer Steckverbindung wird das Rohr in die Mündung des Anschlussstücks eingeführt. Dieser Vorgang wird durch die im Bereich der Mündung ausgebildete Anfasung unterstützt. Als Nächstes gelangt das Rohr in Kontakt mit den Klemmkanten (Profilierung 531) des Klemmrings 530. Durch eine Anfasung im Bereich des mündungsseitigen Endes des Klemmrings 530 erfolgt eine Zentrierung des Klemmrings 530 in Bezug auf das Rohr und die Ausnehmung 523 im Anschlussstück 511. Der in der Ausnehmung 523 aufgenommene Klemmring 530 wird bei Bedarf soweit mitgenommen (und gleichzeitig aufgeweitet), bis das Rohr ihn passieren kann. Anschliessend kontaktiert das Rohr die freien Enden der inneren Abschnitte 542 des Krallrings 540. Weil diese schräg in Einschubrichtung weisen, werden sie beim weiteren Einschieben elastisch verformt und behindern das Einschieben kaum. Ein Zurückziehen des von den Krallen erfassten Rohrs ist aber nur noch mit ausserordentlichem Kraftaufwand möglich.

Beim weiteren Aufschieben des Rohrs wird die Lippendichtung 550 leicht verformt und gegen die Mantelfläche der entsprechenden Ausnehmung 516 gedrückt. Das Einschieben des Rohrs ist beendet, wenn die freie Stirnfläche des Rohrs am Anschlag 518 des Anschlussstücks 511 anliegt. In der entsprechenden Lage ist das Rohr durch die Führungsfläche 522 am vorderen Ende des Anschlussstücks 511, die mittlere Führungsfläche 515 und die Führungsfläche 517 im hintersten Bereich der Aufnahme für das Rohr sicher gestützt. Die Abdichtung des Rohrs gegenüber dem Anschlussstück 511 erfolgt auf der Rohraussenseite, durch die Lippendichtung 550.

Solange kein Mediendruck vorhanden ist, lässt sich der Klemmring 530 in der Ausnehmung 523 um die Rohrachse drehen, so dass das Rohr gegenüber dem Anschlussstück 511 drehbar ist. Sobald ein Mediendruck aufgebaut wird, drückt dieser das Rohr gegen die Einschubrichtung zurück. Der Krallring 540 wird dabei derart verformt, dass seine Klemmkraft auf den Rohraussenmantel massiv zunimmt und dass er somit mit dem Rohr mitgenommen wird. Die Rückzugsbewegung des Rohrs wird so über den Krallring 540 auf den Klemmring 530 übertragen. Aufgrund der unterschiedlichen Winkel zwischen der Auflagefläche zum Kontaktieren der Mantelfläche der Ausnehmung 523 bzw. der Mantelfläche der sich nach hinten erweiternden Ausnehmung 523 und der Achse des Rohrs kann die hinterste Klemmkante der Profilierung 531 des Klemmring 530 sofort in Eingriff mit der Rohraussenseite gelangen und auf diese unmittelbar einen hohen Pressdruck ausüben. Aufgrund dieses Pressdrucks zwischen Ausnehmung 523 und Klemmring 530 einerseits sowie zwischen Klemmring 530 und Rohraussenwand andererseits wird ein Verdrehen des Rohrs relativ zum Anschlussstück 511 nun verhindert.

Im Rahmen der fünften Ausführungsform können zusätzlich Massnahmen vorgesehen sein, die gewährleisten, dass die Verdrehsicherung auch dann erhalten bleibt, wenn der Mediendruck nach einer ersten Druckbeaufschlagung wieder absinkt. Dazu kann beispielsweise die Aussenmantelfläche des Klemmrings 530 mit widerhakenartigen Strukturen versehen sein, die mit entsprechenden Strukturen auf der Innenfläche der Ausnehmung 523 zusammenwirken. Diese Strukturen verhindern, dass der Klemmring bei sinkendem Druck sich wieder in Einschubrichtung bewegen kann, wodurch die Verdrehsicherung wieder gelöst würde.

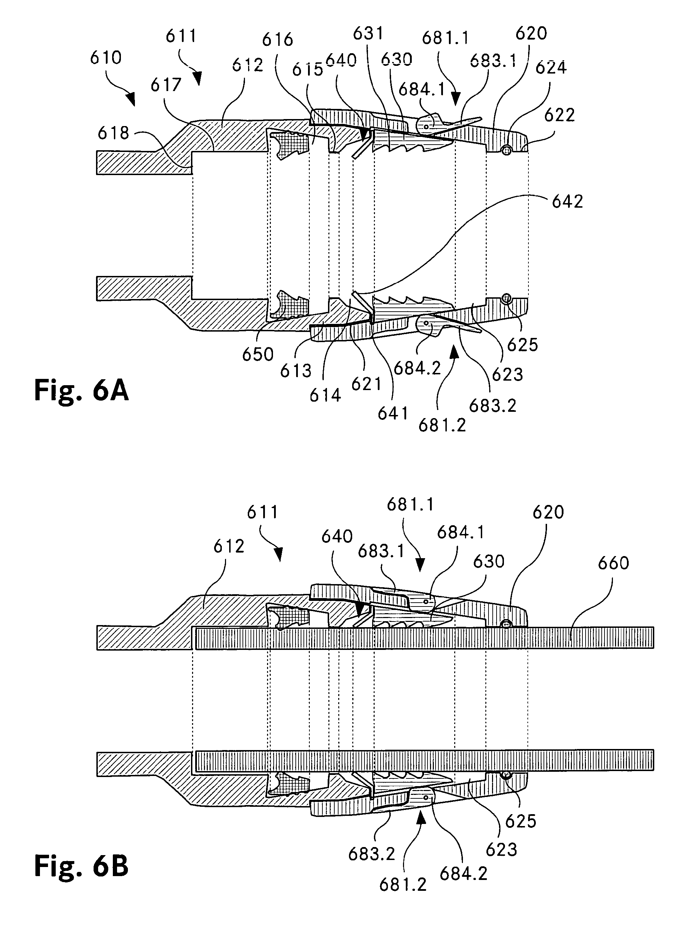

Die Figur 6A zeigt eine sechste Ausführungsform eines erfindungsgemässen Anschlussstücks im Querschnitt, vor dem Einschieben eines Rohrendes. Dargestellt ist ein Bauelement 610 (z. B. Fitting, Armatur etc.) mit einem Anschlussstück 611, welches zur Aufnahme eines Endes eines Metallrohrs geeignet ist. Das Anschlussstück 611 umfasst einen Grundkörper 612, der mit dem Bauelement 610 einstückig aus Rotguss hergestellt ist, und eine diesen teilweise umschliessende hülsenartige Schraubkappe 620 aus glasfaserverstärktem und gegen UV-Strahlung stabilisiertem Polyamid (PA). Die Schraubkappe 620 ist über ein Innengewinde 621 auf ein entsprechendes Aussengewinde 613 des Grundkörpers 612 aufgeschraubt.

Die Schraubkappe 620 ist an ihrem vorderen Teil, auf ihr freies Ende hin, zulaufend ausgebildet und hat in einem vorderen Abschnitt einen Innenquerschnitt, der dem Aussenquerschnitt des aufzunehmenden Rohrs 660 entspricht. Die Schraubkappe bildet in diesem Abschnitt somit eine zylindrische Führungsfläche 622 für das Rohr. Im Bereich dieser Führungsfläche 622 ist in der Schraubkappe 620 eine ringförmig umlaufende Ausnehmung 624 mit im Wesentlichen halbkreisförmigem Querschnitt ausgespart. In dieser Aufnehmung ist ein O-Ring 625 aufgenommen.

Die Schraubkappe 620 weist in ihrem vorderen Teil, nahe ihres freien Endes, weiter eine ringförmige Ausnehmung 623 mit ungefähr trapezförmigem Querschnitt auf, welche sich in Einschubrichtung erweitert. In dieser Ausnehmung 623 ist ein Klemmring 630 gehalten. Dessen Aussenkontur entspricht im Wesentlichen dem Innenquerschnitt eines axialen Bereichs der Ausnehmung 623. Die Innenfläche des Klemmrings 630 ist derart geformt, dass sie den Aussenmantel des Rohrs 660 grossflächig kontaktieren kann, um zwischen der Schraubkappe 620 und dem Rohr 660 eine Klemmwirkung zu erzeugen. Als Klemmring geeignet sind insbesondere die in den Figuren 12 und 13 gezeigten Ausführungen. Der Klemmring ist beispielsweise aus glasfaserverstärktem Polyamid (Glasfasergehalt 30 %) hergestellt und umfasst eine aufvulkanisierte Beschichtung aus einem thermoplastischen Elastomer (TPE). Im entspannten Zustand, wie er in der Figur 6A dargestellt ist, ist der Innenquerschnitt des Klemmrings 630 grösser als der Aussendurchmesser des einzuschiebenden Rohrs. Das Rohr 660 kann somit im Wesentlichen ungehindert durch den Klemmring in das Anschlussstück 611 eingeschoben werden.

Die Aussenmantelfläche des Klemmrings 630 definiert eine erste Auflagefläche zum Kontaktieren einer Mantelfläche der sich nach hinten erweiternden Ausnehmung 623. Die Innenmantelfläche des Klemmrings 630 zur Kontaktierung des Aussenmantels des Rohrs 660 weist eine Profilierung 631 mit vier in Ebenen senkrecht zur Rohrachse umlaufenden Klemmkanten auf. Die Grate der Klemmkanten definieren also eine zweite Auflagefläche zum Kontaktieren der Aussenseite des eingeschobenen Rohrs. Der Winkel zwischen der ersten Auflagefläche und der zweiten Auflagefläche beträgt 11°. Der Winkel zwischen der Mantelfläche der sich nach hinten erweiternden Ausnehmung 623 und der Achse des Rohrs 660 beträgt 9°, ist also etwas kleiner.

In der Schraubkappe 620 sind einander gegenüberliegend zwei Sicherungshebel 681.1, 681.2 um im Wesentlichen tangential in Ebenen senkrecht zur Längsachse der Rohraufnahme verlaufende Achsen in Ausnehmungen der Schraubkappe 620 schwenkbar gelagert. Die Sicherungshebel umfassen einen länglichen Betätigungsgriff 683.1, 683.2 sowie einen Kontaktkörper 684.1, 684.2. Im in der Figur 6A dargestellten Zustand greift der Kontaktkörper 684.1, 684.2 nicht in die von der Schraubkappe 620 definierte Ausnehmung 623 ein. Der Kontaktkörper 684.1, 684.2 berührt die Aussenmantelfläche des Klemmrings 630, übt jedoch keine Kräfte auf diesen aus. Der Betätigungsgriff 683.1, 683.2 ist auf der mündungsseitigen Begrenzungsfläche der Öffnung abgestützt. Sein freies Ende ragt leicht über die Schraubkappe 620 heraus.

Hinten an den Klemmring 630 anschliessend ist ein Krallring 640 aus Federstahl mit einer Stärke von 0.45 mm angeordnet. Dieser weist einen äusseren ringförmigen Abschnitt 641 auf sowie einen an diesen Abschnitt 641 anschliessenden geschlitzten inneren Abschnitt 642. Der geschlitzte innere Abschnitt 642 weist eine Mehrzahl von beabstandeten Zähnen auf, die alle in einem Winkel von 45° vom äusseren Abschnitt 641 weggeknickt sind und somit schräg nach hinten (d. h. von der Mündung des Anschlussstücks 611 weg) weisen. Der Krallring 640 ist im Bereich des Knicks auf einem entsprechend ausgeformten Abschnitt des Grundkörpers 612 geführt und dadurch in Bezug auf das einzuschiebende Rohr 660 zentriert. Der Grundkörper 612 bildet hinter dem Krallring 640 eine umlaufende, sich nach hinten verengende Ausnehmung 614, in welcher der innere Abschnitt 642 des Krallrings 640 aufgenommen ist und welche Raum für eine weitere Verformung des inneren Abschnitts 642 des Krallrings 640 bietet. An diese Ausnehmung 614 schliesst sich eine weitere zylindrische Führungsfläche 615 an, deren Innendurchmesser dem Aussendurchmesser des aufzunehmenden Rohrs 660 entspricht.

Wiederum hinter der Führungsfläche 615 ist im Grundkörper 612 eine weitere umlaufende Ausnehmung 616 mit ungefähr trapezförmigem Querschnitt ausgebildet, welche sich in Einschubrichtung erweitert. In dieser Ausnehmung 616 ist eine Lippendichtung 650 aus elastischem Material mit ungefähr V-förmigem Querschnitt gehalten, wie sie weiter unten, im Zusammenhang mit den Figuren 10 und 11 näher beschrieben ist.

An die Ausnehmung 616 für die Lippendichtung 650 schliesst sich im Grundkörper 612 ein weiterer zylindrischer Abschnitt mit einer Führungsfläche 617 an. Am hinteren Ende dieser Führungsfläche 617 ist im Grundkörper 612 ein als Stufe ausgebildeter Anschlag 618 für die Stirnseite des Rohrs 660 ausgebildet. Im Anschluss an diese Stufe entspricht der Innenquerschnitt des Grundkörpers 612 dem Innenquerschnitt des Rohrs. Es wird somit durch das eingeschobene Rohr 660 und den Grundkörper 612 ein Fluidkanal mit gleichbleibendem Querschnitt gebildet.

Der Steckverbinder wird zusammengesetzt, indem zunächst die Lippendichtung 650 in die entsprechende Ausnehmung 616 im Grundkörper 612 eingesetzt wird. Aufgrund der Elastizität der Lippendichtung 650 gelingt dies problemlos. Anschliessend werden der Klemmring 630 und der Krallring 640 von hinten in die Schraubkappe 620 eingebracht. Die Schraubkappe 620 mit Klemm- und Krallring 630, 640 kann nun mit ihrem Innengewinde 621 auf das Aussengewinde 613 des Grundkörpers 612 aufgeschraubt werden.

Zum Schaffen einer Steckverbindung wird das Rohr 660 in die Mündung des Steckverbinders eingeführt. Aufgrund des grossen Innenquerschnitts kann das Rohr 660 den Klemmring 630 im Wesentlichen ungehindert passieren. Anschliessend kontaktiert das Rohr 660 die freien Enden der inneren Abschnitte 642 des Krallrings 640. Weil diese schräg in Einschubrichtung weisen, werden sie beim weiteren Einschieben elastisch verformt und behindern das Einschieben kaum. Ein Zurückziehen des von den Krallen erfassten Rohrs 660 ist aber nur noch mit ausserordentlichem Kraftaufwand möglich.

Beim weiteren Aufschieben des Rohrs 660 wird die Lippendichtung 650 leicht verformt und gegen die Mantelfläche der entsprechenden Ausnehmung 616 gedrückt. Das Einschieben des Rohrs 650 ist beendet, wenn die freie Stirnfläche des Rohrs 660 am Anschlag 618 des Grundkörpers 612 anliegt. In der entsprechenden Lage ist das Rohr 660 durch die Führungsfläche 622 am vorderen Ende der Schraubkappe 620, die Führungsfläche 615 im Bereich des vorderen Endes des Grundkörpers 612 und die Führungsfläche 618 im hintersten Bereich der Aufnahme für das Rohr 660 sicher gestützt.

Auch nach Erreichen der Endlage können das Rohr 660 und das Anschlussstück 611 noch relativ zueinander um die gemeinsame Achse verdreht werden, denn der Krallring 640, welcher die axiale Sicherung sicherstellt, ist gegenüber dem Anschlussstück 611 verdrehbar. Sobald das Rohr 660 seine Endlage erreicht hat und auch die Winkelstellung des Anschlusstücks der gewünschten Lage entspricht, wird die Verdrehsicherung durch Umklappen der Sicherungshebel 681.1, 681.2 aktiviert. Aufgrund der Lage der Schwenkachse bewegen sich dabei die Kontaktflächen des Kontaktkörpers 684.1, 684.2 radial nach innen und üben eine radiale Druckkraft auf die Aussenmantelfläche des Klemmrings 630 aus. Die maximale Druckkraft herrscht bei ungefähr radial ausgestelltem Sicherungshebel 681.1, 681.2. Durch weiteres Umschwenken nimmt die Kraft leicht ab, so dass eine stabile Endlage des Sicherungshebels 681.1, 681.2 definiert ist. In dieser Endlage ist der Sicherungshebel 681.1, 681.2 in seiner in der Schraubkappe 620 vorhandenen Ausnehmung versenkt, so dass ein unbeabsichtigtes Lösen verhindert ist. Die Figur 6B zeigt das Anschlussstück nach dem Einschieben des Rohrs 660 und mit aktivierter Verdrehsicherung

Die beiden Sicherungshebel 681. 681.2 wirken an einander gegenüberliegenden Stellen auf den Klemmring 630 ein. Dadurch ist auch dann eine radiale Kraftübertragung sichergestellt, wenn sich einer der Sicherungshebel 681.1, 681.2 zufällig gerade im Bereich des bzw. eines Schlitzes des Klemmrings gemäss Figur 10A bzw. gemäss Figur 10B befinden sollte. Aufgrund der TPE-Beschichtung weist der Klemmring 630 sowohl gegenüber der Ausnehmung 623 als auch gegenüber dem Aussenmantel des Rohrs 660 eine hohe Reibung auf. Diese verhindert in aktiviertem Zustand der Verdrehsicherung bei nach hinten geschwenkten Sicherungshebeln 681.1, 681.2 ein weiteres Verdrehen des Anschlussstücks 611 relativ zum eingeschobenen Rohr.

Die Abdichtung des Rohrs 660 gegenüber dem Anschlussstück 611 erfolgt auf der Rohraussenseite, durch die Lippendichtung 650. Die axiale Sicherung des eingeschobenen Rohrs 660 erfolgt primär durch den Krallring 640, unterstützend auch durch den Klemmring 630.

Der Aufnahmeraum 623, in welchem unter anderem der metallische Krallring 640 aufgenommen ist, wird bei eingeschobenem Rohr 660 durch den O-Ring 625 nach aussen abgedichtet. Die Sicherungshebel 681.1, 681.2 sind gegenüber ihrer Aufnahmeöffnung und damit gegenüber dem Aufnahmeraum 623 ebenfalls abgedichtet, nämlich durch eine Beschichtung mit einem TPE, welcher bei eingeklapptem Sicherungshebel 681., 681.2 eine Dichtung mit der Aufnahme schafft. Vor dem Einschieben des Rohrs 660 möglicherweise im Aufnahmeraum 623 befindliche Feuchtigkeit wird durch das Rotgussmaterial des Grundkörpers 612 gebunden; das Eindringen von weiterer Feuchtigkeit ist durch die Abdichtung verhindert. Dadurch kann die Korrosion des Krallrings 640 minimiert werden. Das Anschlussstück 611 kann mehrfach verwendet werden, wobei zum Entfernen des von ihm gehaltenen Rohrs 660 die Schraubkappe 620 abgeschraubt werden kann. Um sicherzustellen dass das Abschrauben der Schraubkappe 620 zuverlässig entdeckt wird, kann beim Aufschrauben eine Garantieverbindung zwischen der Schraubkappe 620 und dem Grundkörper 612 geschaffen werden (hier nicht dargestellt). Zur Herstellung einer neuen Verbindung können die Schraubkappe 620 und mit ihr der Klemmring 630 und der Krallring 640 durch neue Teile ersetzt werden. Gegebenenfalls ist auch die Lippendichtung 650 zu ersetzen.

Bei einer Variante zum Anschlussstück gemäss der sechsten Ausführungsform wird der Grundkörper 612 durch Umformen hergestellt, z. B. aus Edelstahl oder Silicium-Bronze. Dadurch können die Herstellungskosten des Anschlussstücks erheblich reduziert werden. Auch die Schraubkappe 620 kann aus Metall, insbesondere Edelstahl, hergestellt sein.

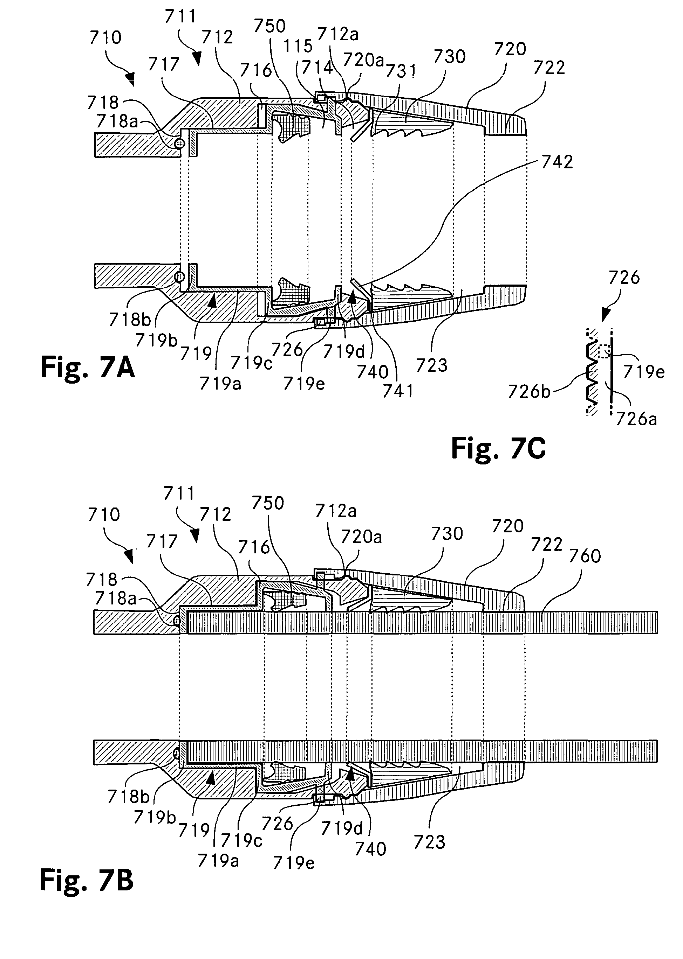

Die Figuren 7A, B zeigen eine siebte Ausführungsform eines erfindungsgemässen Anschlussstücks. In der Figur 7A ist das Anschlussstück 711 mit blockierter Kappe, in der Figur 7B mit freigegebener Kappe dargestellt. Dargestellt ist ein Bauelement 710 (z. B. Fitting, Armatur etc.) mit dem Anschlussstück 711, welches zur Aufnahme eines Endes eines Metallrohrs geeignet ist. Das Anschlussstück 711 umfasst wiederum einen Grundkörper 712, der mit dem Bauelement 710 einstückig aus Rotguss hergestellt ist, und eine diesen teilweise umschliessende hülsenartige Kappe 720 aus glasfaserverstärktem und gegen UV-Strahlung stabilisiertem Polyamid (PA). Die Kappe 720 verfügt über eine umlaufende Nut 720a, über welche sie auf einem umlaufenden Wulst 712a des Grundkörpers 712 um ihre Achse drehbar, aber axial unverschiebbar gelagert ist.

Die Kappe 720 ist an ihrem vorderen Teil, auf ihr freies Ende hin, zulaufend ausgebildet und hat in einem vorderen Abschnitt einen Innenquerschnitt, der dem Aussenquerschnitt des aufzunehmenden Rohrs 760 entspricht. Die Kappe 720 bildet in diesem Abschnitt somit eine zylindrische Führungsfläche 722 für das Rohr 760.

Die Kappe 720 weist in ihrem vorderen Teil, nahe ihres freien Endes, weiter eine ringförmige Ausnehmung 723 mit ungefähr trapezförmigem Querschnitt auf, welche sich in Einschubrichtung erweitert. In dieser Ausnehmung 723 ist ein Klemmring 730 aus glasfaserverstärktem Polyamid (Glasfasergehalt 30%) gehalten. Dessen Aussenkontur entspricht im Wesentlichen dem Innenquerschnitt eines axialen Bereichs der Ausnehmung 723. Die Innenfläche des Klemmrings 730 ist derart geformt, dass sie den Aussenmantel des Rohrs 760 grossflächig kontaktieren kann, um zwischen der Kappe 720 und dem Rohr 760 eine Klemmwirkung zu erzeugen. Als Klemmring geeignet sind beispielsweise die in den Figuren 12-15 gezeigten Ausführungen aber auch Klemmringe, deren Querschnitt entlang seines Umfangs konstant oder praktisch konstant sind, da der Klemmring zum Einführen in das Anschlussstück 711 nicht komprimierbar sein muss. Der Klemmring ist beispielsweise aus glasfaserverstärktem Polyamid (Glasfasergehalt 30 %) hergestellt und umfasst eine aufvulkanisierte Beschichtung aus einem thermoplastischen Elastomer (TPE).

Die Aussenmantelfläche des Klemmrings 730 definiert eine erste Auflagefläche zum Kontaktieren einer Mantelfläche der sich nach hinten erweiternden Ausnehmung 723. Die Kontaktierung erfolgt so, dass der Klemmring 730 relativ zur Kappe 720 drehfest ist, z. B. indem im Bereich der Ausnehmung 723 innen an der Kappe 720 radial verlaufende Profilierungen ausgebildet sind, die mit entsprechenden Rillen in der Aussenmantelfläche des Klemmrings 730 zusammenwirken. Die Innenmantelfläche des Klemmrings 730 zur Kontaktierung des Aussenmantels des Rohrs 760 weist eine Profilierung 731 mit vier in Ebenen senkrecht zur Rohrachse umlaufenden Klemmkanten auf. Die Grate der Klemmkanten definieren also eine zweite Auflagefläche zum Kontaktieren der Aussenseite des eingeschobenen Rohrs. Der Winkel zwischen der ersten Auflagefläche und der zweiten Auflagefläche beträgt 11°. Der Winkel zwischen der Mantelfläche der sich nach hinten erweiternden Ausnehmung 723 und der Achse des Rohrs 760 beträgt 9°, ist also etwas kleiner.

Hinten an den Klemmring 730 anschliessend ist ein Krallring 740 aus Federstahl mit einer Stärke von 0.45 mm angeordnet. Dieser weist einen äusseren ringförmigen Abschnitt 741 auf sowie einen an diesen Abschnitt 741 anschliessenden geschlitzten inneren Abschnitt 742. Der geschlitzte innere Abschnitt 742 weist eine Mehrzahl von beabstandeten Zähnen auf, die alle in einem Winkel von 45° vom äusseren Abschnitt 741 weggeknickt sind und somit schräg nach hinten (d. h. von der Mündung des Anschlussstücks 711 weg) weisen. Der Krallring 740 ist im Bereich des Knicks auf einem entsprechend ausgeformten Abschnitt des Grundkörpers 712 geführt und dadurch in Bezug auf das einzuschiebende Rohr 760 zentriert. Der Grundkörper 712 bildet hinter dem Krallring 740 eine umlaufende, sich nach hinten verengende Ausnehmung 714, in welcher der innere Abschnitt 742 des Krallrings 740 aufgenommen ist und welche Raum für eine weitere Verformung des inneren Abschnitts 742 des Krallrings 740 bietet.

Wiederum hinter der Ausnehmung 714 ist im Grundkörper 712 eine weitere umlaufende Ausnehmung 716 ausgebildet, die sich in einem vorderen Teil in Einschubrichtung erweitert und in einem hinteren Teil zylindrisch ausgebildet ist. An die Ausnehmung 716 schliesst sich im Grundkörper 712 ein weiterer zylindrischer Abschnitt mit einer Führungsfläche 717 an. Am hinteren Ende dieser Führungsfläche 717 ist im Grundkörper 712 ein als Stufe ausgebildeter Anschlag 718 für die Stirnseite des Rohrs 760 ausgebildet. Im Anschluss an diese Stufe entspricht der Innenquerschnitt des Grundkörpers 712 dem Innenquerschnitt des Rohrs. Es wird somit durch das eingeschobene Rohr 760 und den Grundkörper 712 ein Fluidkanal mit gleichbleibendem Querschnitt gebildet.

Eine innere Hülse 719 ist in der Ausnehmung 716 aufgenommen und auf der Führungfläche 717 geführt. Die innere Hülse 719 weist eine Aussenkontur auf, die der Innenkontur des Grundkörpers 712 im entsprechenden Bereich entspricht. Die Konturen sind so gewählt, dass die innere Hülse 719 gegenüber dem Grundkörper 712 drehfest ist, beispielsweise in der Art eines Sechskants oder mit zusammenwirkenden Stegen und Rillen. Die innere Hülse weist einen axialen Abschnitt 719a auf, dessen Aussenfläche mit der Führungsfläche 717 zusammenwirkt. Am hinteren Ende des axialen Abschnitts 719a schliesst sich ein radial nach innen gerichteter Abschlussflansch 719b an, der sich soweit nach innen erstreckt, dass seine Fläche mit dem Anschlag 718 fluchtet. Vorne ist am axialen Abschnitt 719a eine Stufe 719c ausgebildet, durch welche sich der Aussendurchmesser der inneren Hülse 719 auf den Innendurchmesser der Aufnahme 716 erweitert. Im weiteren Verlauf erstreckt sich die Aussenwand der inneren Hülse 719 zunächst parallel zur Achse und dann nach innen zulaufend. Abgeschlossen ist die innere Hülse 719 nach vorne mit einem weiteren radial nach innen gerichteten Flansch 719d. Die innere Hülse ist so dimensioniert, dass ihre Aussenkontur in einer vorgeschobenen, in der Figur 7A dargestellten Stellung mit dem entsprechenden Bereich der Ausnehmung 716 fluchtet, wobei in dieser Stellung die Stufe 719c von der hinteren Abschlusswand der Ausnehmung 716 axial beabstandet ist. Die innere Hülse 719 lässt sich somit axial nach hinten verschieben, wobei sie auf dem zylindrischen Abschnitt der Ausnehmung 716 und der Führungsfläche 717 geführt ist.

Im Bereich der zulaufenden Fläche sind vier im gegenseitigen Winkelabstand von 90° angeordnete, radial nach aussen weisende Nocken 719e ausgebildet. Diese wirken mit einer umlaufenden Nut 726 in der Kappe 720 zusammen.

Die Stufe 719c und der vorne anschliessende Abschnitt der inneren Hülse 719 bilden auf der Innenseite eine Ausnehmung, deren Form im Wesentlichen derjenigen der Ausnehmung 716 entspricht. In dieser Ausnehmung ist eine Lippendichtung 750 aus elastischem Material mit ungefähr V-förmigem Querschnitt gehalten, wie sie weiter unten, im Zusammenhang mit den Figuren 10 oder 11 näher beschrieben ist. In der radialen Fläche, welche den Anschlag 718 bildet, ist eine ringförmige Ausnehmung 718a ausgespart, in welcher eine Ringdichtung 718b aufgenommen ist.

Der Steckverbinder wird zusammengesetzt, indem zunächst die Ringdichtung 718b in die Ausnehmung 718a eingesetzt wird. Anschliessend werden die innere Hülse 719 in den Grundkörper 712 und die Lippendichtung 750 in die entsprechende Ausnehmung in der inneren Hülse 719 eingesetzt. Anschliessend werden der Klemmring 730 und der Krallring 740 von hinten in die Kappe 720 eingebracht. Die Kappe 720 mit Klemm- und Krallring 730, 740 kann nun auf den Grundkörper 712 aufgeschoben werden und rastet mit ihrer Nut 720a auf dem Wulst 712a des Grundkörpers 712 ein.

Zum Schaffen einer Steckverbindung wird das Rohr 760 in die Mündung des Steckverbinders eingeführt. Als Nächstes gelangt das Rohr 760 in Kontakt mit den Klemmkanten (Profilierung 731) des Klemmrings 730. Durch eine Anfasung im Bereich des mündungsseitigen Endes des Klemmrings 730 erfolgt eine Zentrierung des Klemmrings 730 in Bezug auf das Rohr 760 und die Ausnehmung 723 im Kappenteil 720. Der in der Ausnehmung 723 aufgenommene Klemmring 730 wird bei Bedarf soweit mitgenommen (und gleichzeitig aufgeweitet), bis das Rohr 760 ihn passieren kann. Anschliessend kontaktiert das Rohr 760 die freien Enden der inneren Abschnitte 742 des Krallrings 740. Weil diese schräg in Einschubrichtung weisen, werden sie beim weiteren Einschieben elastisch verformt und behindern das Einschieben kaum. Ein Zurückziehen des von den Krallen erfassten Rohrs 760 ist aber nur noch mit ausserordentlichem Kraftaufwand möglich.

Beim weiteren Aufschieben des Rohrs 760 wird die Lippendichtung 750 leicht verformt und gegen die Mantelfläche der entsprechenden Ausnehmung in der inneren Hülse 719 gedrückt. Beim weiteren Einschieben des Rohrs 760 kontaktiert dieses den Abschlussflansch 719b der inneren Hülse 719 und nimmt diese beim weiteren Einschieben axial mit, bis der Abschlussflansch 719b am Anschlag 718 anliegt. Durch diese axiale Bewegung der inneren Hülse 719 werden die Nocken 719e ebenfalls axial nach hinten bewegt und gelangen so aus einem umlaufenden Abschnitt 726a der Nut 726 in der Kappe 720 in axial anschliessend an diese Nut ausgebildete Rastpositionen 726b. Ein Teilbereich der umlaufenden Nut 726 mit den Rastpositionen ist in der Figur 7C schematisch dargestellt. Die Rastpositionen 726b sind voneinander durch nach innen zum umlaufenden Abschnitt 726a gerichtete keilförmige Abschnitte getrennt. Die Dimensionen der Rastpositionen 726b einerseits und der Nocken 719e andererseits sind so gewählt, dass bei vollständig nach hinten bewegter innerer Hülse 719 die Nocken 719e den Grund der Rastpositionen 726b vollständig ausfüllen und somit ein Verdrehen der Kappe 720 verunmöglichen. Im Bereich der Rastpositionen ist die Nut zudem tiefer, so dass die vorher leicht vorgespannte innere Hülse 719 durch ihre Elastizität die Nocken 719e in die Rastpositionen drückt, wonach ein Zurückziehen der inneren Hülse 719 relativ zur Kappe 720 verhindert ist. Die Form der unmittelbar aneinander anschliessenden Rastpositionen 726b ist derart, dass die Nocken 719e bei der axialen Verschiebung in die nächstgelegene Rastposition 726b geführt und darin zentriert werden. Vor dem Verschieben der inneren Hülse 719, also bis kurz vor Erreichen der Endposition des Rohrs 760 im Anschlussstück 711, lässt sich das Rohr 760 noch bezüglich des Anschlussstücks 711 um seine Achse drehen. Mit dem Verschieben entlang des letzten Teilstücks wird dann die Verdrehsicherung geschaffen, indem die vorher drehbare Kappe 720, in welcher der Klemmring 730 drehfest gelagert ist, mit Bezug zum Grundkörper 712 gegen Drehungen festgesetzt wird.

In der Endlage ist das Rohr 760 durch die Führungsfläche 722 am vorderen Ende der Kappe 720 und die Führungsfläche der inneren Hülse 719 im hintersten Bereich der Aufnahme für das Rohr 760 sicher gestützt.

Die Abdichtung des Rohrs 760 gegenüber dem Anschlussstück 711 erfolgt auf der Rohraussenseite, durch die Lippendichtung 750. Der Innenraum des Anschlussstücks 711 ist zudem durch die Ringdichtung 718b und die innere Hülse 719 gegen aussen abgedichtet. Die axiale Sicherung des eingeschobenen Rohrs 760 erfolgt durch den Krallring 740 und den Klemmring 730. Der Haltekraft des Krallrings 740 wird durch den Versuch des Zurückziehens massiv verstärkt. Die Rückzugsbewegung des Rohrs 760 wird zudem über den Krallring 740 auf den Klemmring 730 übertragen. Aufgrund der unterschiedlichen Winkel zwischen der Auflagefläche zum Kontaktieren der Mantelfläche der Ausnehmung 723 bzw. der Mantelfläche der sich nach hinten erweiternden Ausnehmung 723 und der Achse des Rohrs 760 kann die hinterste Klemmkante der Profilierung 731 sofort in Eingriff mit der Rohraussenseite gelangen und auf diese unmittelbar einen hohen Pressdruck ausüben. Sollte ein weiteres Zurückziehen des Rohrs 760 noch möglich sein, gelangt der Klemmring 730 mit seiner gesamten Aussenmantelfläche in Kontakt mit der Mantelfläche der Ausnehmung 723 und wirkt mit allen vier Klemmkanten auf die Rohraussenfläche. Aufgrund der Konizität der Ausnehmung 723 verkeilt sich der Klemmring 730 in dieser und verhindert somit zuverlässig ein weiteres Zurückziehen.

Das Anschlussstück 711 kann mehrfach verwendet werden, wobei zum Entfernen des von ihm gehaltenen Rohrs 760 die Kappe 720 abgeschraubt werden kann. Zur Herstellung einer neuen Verbindung können die Kappe 720 und mit ihr der Klemmring 730 und der Krallring 740 durch neue Teile ersetzt werden. Gegebenenfalls ist auch die Lippendichtung 750 zu ersetzen.

Bei einer Variante des Anschlussstücks gemäss der siebten Ausführungsform fehlt die innere Hülse 719, und die Kappe 720 lässt sich vom Benutzer am Grundkörper 712 manuell festsetzen, sobald das Rohr 760 und das Anschlussstück 711 die gewünschte relative Orientierung haben.

Die Figur 8 zeigt ein Schrägbild eines Krallrings 140 für ein erfindungsgemässes Anschlussstück. Der Krallring 140 ist aus Federstahl mit einer Stärke von 0.45 mm gefertigt. Er weist einen äusseren ringförmigen Abschnitt 141 auf sowie einen an diesen Abschnitt 141 anschliessenden inneren Abschnitt 142, der aus einer Mehrzahl von Zähnen 143 gebildet ist. Diese sind im dargestellten unbelasteten Zustand alle ungefähr in einem Winkel von 45° vom äusseren Abschnitt 141 weggeknickt und weisen in eingebautem Zustand somit schräg nach hinten, d. h. von der Mündung des Anschlussstücks 111 weg. Die Zähne 143 weisen an ihrem freien Ende einen konkaven Abschnitt auf, wobei dieser entlang eines Kreisbogens verläuft, der dem Aussendurchmesser des aufzunehmenden Rohrs entspricht. Diese Formgebung führt dazu, dass das eingeschobene Rohr möglichst grossflächig kontaktiert wird.

Die Figur 9 zeigt ein Schrägbild eines weiteren Krallrings 240 für ein erfindungsgemässes Anschlussstück. Der Krallring 240 ist aus Federstahl mit einer Stärke von 0.45 mm gefertigt. Er weist einen äusseren ringförmigen Abschnitt 241 auf sowie einen an diesen Abschnitt 241 anschliessenden inneren Abschnitt 242, der aus einer Mehrzahl von Zähnen 243 gebildet ist. Diese sind im dargestellten unbelasteten Zustand alle ungefähr in einem Winkel von 45° vom äusseren Abschnitt 241 weggeknickt und weisen in eingebautem Zustand somit schräg nach hinten, d. h. von der Mündung des Anschlussstücks 211 weg. Die Zähne 243 sind im Querschnitt v-förmig mit zwei ungefähr einen Winkel von 120° einschliessenden Schenkeln. Die Mittelsenkrechte dieser Schenkel verläuft radial. An ihrem freien Ende sind die Zähne 243 gerade abgeschnitten.

Der äussere ringförmige Abschnitt 241 umfasst auf der Aussenseite eine Reihe von Ausnehmungen 241a mit im Wesentlichen trapezförmigem Querschnitt. Zwischen diesen Ausnehmungen 241a verlaufen kreisbogenförmige Abschnitte. Der Krallring 240 gemäss Figur 9 ist derart ausgebildet, dass er sowohl eine axiale Sicherung eines eingeschlossenen Rohrs als auch eine Verdrehsicherung desselben leisten kann. Die Ausnehmungen 241 a können ein Sicherungselement für die Verdrehsicherung aufnehmen (vgl. oben, Beschreibung zur Figur 2).

Die Figur 10 zeigt einen Querschnitt einer Lippendichtung für das erfindungsgemässe Anschlussstück. Die Lippendichtung 150 besteht aus EPDM mit einer Shore-Härte von 70. Sie ist im Querschnitt im Wesentlichen V-förmig mit einer inneren Lippe 151, die einen ersten Schenkel der V-Form bildet, und einer äusseren Lippe 156, die den zweiten Schenkel der V-Form bildet. Zwischen den beiden Lippen 151, 156 ist eine offene Stirnseite in der Form einer umlaufenden Ausbuchtung 152 ausgebildet. In der Verlängerung der äusseren Lippe 156 sind drei Rillen 157 ausgebildet, die Verlängerung der inneren Lippe 151 weist eine Stufe 153 auf. Das an die offene Stirnseite der Lippendichtung 150 anschliessende Ende der äusseren Lippe weist acht am Umfang gleichmässig verteilte im Wesentlichen halbkugelförmige Noppen 158 auf. Die der offenen Stirnseite gegenüberliegende hintere Stirnseite 154 ist eben. Die innere Lippe 151 weist einen Winkel von durchschnittlich ca. 110° zur hinteren Stirnseite 154, die äussere Lippe 156 einen Winkel von durchschnittlich ca. 95° zur hinteren Stirnseite 154 auf. Die offene Stirnseite ist in Bezug auf die hintere Stirnseite 154 um ca. 20° nach innen geneigt. Die sich durch die angegebenen Winkel ergebende Keilform der Lippendichtung 150 ermöglicht ein einfaches Einschieben des Rohrs und ist der sich erweiternden Ausnehmung für das Ringdichtungselement angepasst.

Die Neigung der äusseren Lippe 156 und des daran anschliessenden äusseren Abschnitts ist so an die Neigung der die Lippendichtung 150 aufnehmenden Ausnehmung 116 angepasst, dass die hintere Stirnseite bei in den Grundkörper 112 eingesetzter Lippendichtung 150 in Bezug auf den Aufnahmeraum für das Rohr radial verläuft. Die Rillen 157 in der Verlängerung der äusseren Lippe 156 gewährleisten eine sichere Abdichtung zwischen der Aussenfläche der Dichtung und der Ausnehmung 116 im Grundkörper. Die offene Stirnseite zwischen den beiden Lippen 151, 156 ist dem geführten Medium zugewandt. Das Medium drückt also aufgrund seines Drucks die beiden Lippen 151, 156 auseinander und unterstützt somit eine sichere Abdichtung sowohl gegenüber der Ausnehmung 116 als auch gegenüber der Aussenfläche des Rohrs.

Im durch die vordere Lippe 151 gebildeten Zwischenraum vor der Stufe 153 lässt sich optional eine gewisse Menge Fett einbringen, z. B. ein Fett, welches auf der Kombination eines organischen Polymers und Dimethyl-Polysiloxan basiert und einer der NLGI-Klassen 1 - 3 angehört. Das Fett dringt aufgrund seiner Fluidität in kleinflächige Unebenheiten der Rohraussenseite ein und schafft somit eine zusätzliche Abdichtung. Die Aufnahme im Zwischenraum verhindert ein Auswaschen des Fetts.

Die Figur 11 zeigt einen Querschnitt eines mehrteiligen Dichtungselements 170 für das erfindungsgemässe Anschlussstück. Dieses ist anstelle des im Zusammenhang mit der Figur 10 dargestellten Dichtungselements 150 ohne weitere Anpassungen in den vorstehend beschriebenen Anschlussstücken einsetzbar.

Das Dichtungselement 170 ist aus einem ersten Dichtungsteil 170a sowie einem zweiten Dichtungsteil 170b zusammengesetzt. Das erste Dichtungsteil 170a besteht aus EPDM mit einer Shore-Härte von 70. Es ist im Querschnitt im Wesentlichen V-förmig mit einer inneren Lippe 171, die einen ersten Schenkel der V-Form bildet, und einer äusseren Lippe 176, die den zweiten Schenkel der V-Form bildet. Zwischen den beiden Lippen 171, 176 ist eine offene Stirnseite in der Form einer umlaufenden Ausbuchtung 172 ausgebildet. In der Verlängerung der äusseren Lippe 176 sind drei Rillen 177 ausgebildet, die Verlängerung der inneren Lippe 171 weist eine Stufe 173 auf. Das an die offene Stirnseite des Dichtungsteils 170a anschliessende Ende der äusseren Lippe weist acht am Umfang gleichmässig verteilte im Wesentlichen halbkugelförmige Noppen 178 auf. Die der offenen Stirnseite gegenüberliegende hintere Stirnseite 174 ist eben. Die innere Lippe 171 weist einen Winkel von durchschnittlich ca. 110° zur hinteren Stirnseite 174, die äussere Lippe 176 einen Winkel von durchschnittlich ca. 95° zur hinteren Stirnseite 174 auf. Die offene Stirnseite ist in Bezug auf die hintere Stirnseite 174 um ca. 20° nach innen geneigt. Die sich durch die angegebenen Winkel ergebende Keilform des Dichtungsteils 170a ermöglicht ein einfaches Einschieben des Rohrs und ist der sich erweiternden Ausnehmung für das Ringdichtungselement angepasst.

In der Innenfläche des ersten Dichtungsteils 170a ist angrenzend an die Stufe 173 eine Ausnehmung mit leichtem Hinterschnitt ausgebildet, in welcher das zweite Dichtungsteil 170b passend aufgenommen ist. Dieses weist einen im Wesentlichen ovalen Querschnitt auf, welcher nach innen, auf die Rohraussenfläche zu leicht zuläuft und an der Innenseite abgeflacht ist. Das zweite Dichtungsteil 170b ist aus EPDM mit einer Shore-Härte von 50 gefertigt, also weicher als das erste Dichtungsteil 170a. Es kann sich somit Unebenheiten der Rohraussenfläche anpassen und eine sichere Abdichtung gewährleisten. Gleichzeitig ist es durch das erste Dichtungsteil 170a sowohl axial als auch radial nach aussen mechanisch gestützt. Die Funktion des Dichtungselements 170 entspricht ansonsten derjenigen der im Zusammenhang mit der Figur 10 eingehend beschriebenen Ringdichtung 150.

Die Figuren 12-14 sowie 15A sind Schrägbilder von Klemmringen für ein erfindungsgemässes Anschlussstück. Die Figur 15B zeigt einen Querschnitt des Klemmrings gemäss Figur 15A.

Der in der Figur 12 dargestellte Klemmring 630 ist aus glasfaserverstärktem Polyamid (Glasfasergehalt 30 %) hergestellt. Der Klemmring 630 weist einen durchgehenden axialen Schlitz 632 auf, so dass er im Durchmesser eine gewisse Variabilität aufweist. Die Aussenmantelfläche des Klemmrings 630 definiert eine erste Auflagefläche zum Kontaktieren der Mantelfläche der sich nach hinten erweiternden Ausnehmung. Sie weist eine Mehrzahl von Stegen 633 auf, welche die Auflagefläche bilden. Die Innenmantelfläche des Klemmrings 630 zur Kontaktierung des Aussenmantels des Rohrs weist wiederum eine Profilierung 631 mit vier in Ebenen senkrecht zur Rohrachse umlaufenden Klemmkanten 634 auf. Die Stege weisen zwei unterschiedlich geneigte Abschnitte 633a, 633b auf, wobei ein Winkel zwischen dem vorderen Abschnitt 633a (also demjenigen Abschnitt im Bereich geringeren Querschnitts des Klemmrings 630) und der inneren Auflagefläche für das Rohr 32° und ein Winkel zwischen dem hinteren Abschnitt 633b (also demjenigen Abschnitt im Bereich grösseren Querschnitts des Klemmerings 630) und der inneren Auflagefläche für das Rohr 27° beträgt. Durch die unterschiedlichen Winkel wird beim Zurückziehen des eingeschobenen Rohrs der Anpressdruck des Klemmrings 630 verstärkt.

Der in der Figur 13 dargestellte Klemmring 690 umfasst drei Klemmsegmente 690a, 690b, 690c, welche jeweils aus glasfaserverstärktem Polyamid (Glasfasergehalt 30 %) hergestellt sind und je einen Segmentwinkel von ca. 110° haben. Die Klemmsegmente 690a...c sind untereinander durch faltbare Verbindungsabschnitte 695a...695c verbunden, welche aus einem flexiblen Kunststoffmaterial hergestellt sind. Die im Bereich des geringsten Querschnitts der Klemmsegmente 690a...c angebrachten Verbindungsabschnitte 695a...c sind bandartig ausgebildet, wobei die Hauptflächen des Bandes ungefähr jeweils tangential zum Umfang des Klemmrings 690 verlaufen. Der Durchmesser des Klemmrings 690 lässt sich verringern, indem die Verbindungsabschnitte 695a...695c komprimiert und nach innen zusammengedrückt werden. Dies ermöglicht das Einführen des Klemmrings 690 in das Anschlussstück bei der Montage desselben.

Die Aussenmantelflächen der Klemmsegmente 690a...690c definieren eine erste Auflagefläche zum Kontaktieren der Mantelfläche der sich nach hinten erweiternden Ausnehmung. Sie weisen eine Mehrzahl von Stegen 693 auf, welche die Auflagefläche bilden. Die Innenmantelfläche der Klemmsegmente 690a...690c zur Kontaktierung des Aussenmantels des Rohrs weist wiederum eine Profilierung 691 mit vier in Ebenen senkrecht zur Rohrachse umlaufenden Klemmkanten 694 auf. Die Stege weisen zwei unterschiedlich geneigte Abschnitte 693a, 693b auf, wobei ein Winkel zwischen dem vorderen Abschnitt 693a (also demjenigen Abschnitt im Bereich geringeren Querschnitts des Klemmrings 690) und der inneren Auflagefläche für das Rohr 32° und ein Winkel zwischen dem hinteren Abschnitt 693b (also demjenigen Abschnitt im Bereich grösseren Querschnitts des Klemmerings 690) und der inneren Auflagefläche für das Rohr 27° beträgt. Durch die unterschiedlichen Winkel wird beim Zurückziehen des eingeschobenen Rohrs der Anpressdruck des Klemmrings 690 verstärkt.

Der in der Figur 14 dargestellte Klemmring 130 ist aus glasfaserverstärktem Polyamid (Glasfasergehalt 30 %) hergestellt. Der Klemmring 130 weist einen durchgehenden axialen Schlitz 132 auf, so dass er im Durchmesser eine gewisse Variabilität aufweist. Die Aussenmantelfläche des Klemmrings 130 definiert eine erste Auflagefläche zum Kontaktieren der Mantelfläche der sich nach hinten erweiternden Ausnehmung. Sie weist eine Mehrzahl von Stegen 133 auf, welche die Auflagefläche bilden.

Die Innenmantelfläche des Klemmrings 130 zur Kontaktierung des Aussenmantels des Rohrs weist wiederum eine Profilierung 131 mit vier in Ebenen senkrecht zur Rohrachse umlaufenden Klemmkanten 134 auf sowie einer Reihe von gleichmässig in Umfangsrichtung beabstandeten, dazu rechtwinklig angeordneten axialen Klemmkanten 137. Die Stege weisen zwei unterschiedlich geneigte Abschnitte 133a, 133b auf, wobei ein Winkel zwischen dem vorderen Abschnitt 133a (also demjenigen Abschnitt im Bereich geringeren Querschnitts des Klemmrings 130) und der inneren Auflagefläche für das Rohr 32° und ein Winkel zwischen dem hinteren Abschnitt 133b (also demjenigen Abschnitt im Bereich grösseren Querschnitts des Klemmerings 130) und der inneren Auflagefläche für das Rohr 27° beträgt. Durch die unterschiedlichen Winkel wird beim Zurückziehen des eingeschobenen Rohrs der Anpressdruck des Klemmrings 130 verstärkt.

Durch die umlaufenden Klemmkanten 134 und die axialen Klemmkanten 137 kann der Klemmring 130 ein aufgenommenes Rohr sowohl in axialer Richtung als auch gegen Verdrehen sichern.

Die Figur 15A zeigt ein Schrägbild des Klemmrings 330 für das erfindungsgemässe Anschlussstück, die Figur 15B zeigt einen radialen Querschnitt durch diesen Klemmring. Der Klemmring 330 ist aus Polyamid hergestellt. Er weist keilartige Abschnitte 333 auf, die durch dünne Verbindungsstege 335 verbunden sind. Zudem ist ein umlaufender Ring 336 aus einem weicheren Material vorhanden, dessen Aussenumfang im entsprechenden axialen Bereich des Klemmrings 330 den grössten Durchmesser aufweist. Die verwendeten Materialien und die Materialstärke der Verbindungsstege sind so gewählt, dass der Durchmesser des Klemmrings derart reduziert werden kann, dass er bei der Herstellung des Anschlussstücks 311 durch die Mündung des Anschlussstücks 311 in den Aufnahmeraum 323 eingebracht werden kann.

Die Innenmantelfläche des Klemmrings 330 zur Kontaktierung des Aussenmantels des Rohrs weist eine Profilierung 331 mit vier in Ebenen senkrecht zur Rohrachse umlaufenden Klemmkanten 334 auf sowie einer Reihe von gleichmässig in Umfangsrichtung beabstandeten, dazu rechtwinklig angeordneten axialen Klemmkanten 337. Die keilartigen Abschnitte 333 weisen zwei unterschiedlich geneigte Abschnitte 333a, 333b vor bzw. hinter dem umlaufenden Ring 336 auf, wobei ein Winkel zwischen dem vorderen Abschnitt 333a (also demjenigen Abschnitt im Bereich geringeren Querschnitts des Klemmrings 330) und der inneren Auflagefläche für das Rohr 32° und ein Winkel zwischen dem hinteren Abschnitt 333b (also demjenigen Abschnitt im Bereich grösseren Querschnitts des Klemmerings 330) und der inneren Auflagefläche für das Rohr 27° beträgt. Durch die unterschiedlichen Winkel wird beim Zurückziehen des eingeschobenen Rohrs der Anpressdruck des Klemmrings 330 verstärkt. Der umlaufende Ring 336 ist aussen leicht gewölbt, so dass er stets im Kontakt ist mit der Innenfläche der Aufnahme 323.

Die Erfindung ist nicht auf die dargestellten Ausführungsbeispiele beschränkt. So lassen sich insbesondere einzelne Baugruppen der gezeigten Ausführungsformen, wie z. B. der Gehäuseaufbau (Grundkörper/Kappe oder einteilig), der Klemmring, der Krallring, die Lippendichtung, die Abdichtung des Aufnahmeraums für den Krallring, die Verdrehsicherung usw.) anders kombinieren.

Zusammenfassend ist festzustellen, dass durch die Erfindung ein Anschlussstück geschaffen wird, welches eine hohe Lebensdauer aufweist und eine zuverlässige axiale Sicherung ermöglicht.

## Patentansprüche

1. Anschlussstück für Metallrohre, mit einem ersten rohrförmigen Teil (111), welches mit einem zweiten rohrförmigen Teil (160) eines fluidführenden Leitungssystems für Trinkwasser fluiddicht verbindbar ist, wobei
a) das Anschlussstück derart ausgebildet ist, dass das zweite rohrförmige Teil (160) in verbundenem Zustand teilweise vom ersten rohrförmigen Teil (111) umschlossen ist,
b) im ersten rohrförmigen Teil (111) an einer in verbundenem Zustand das zweite rohrförmige Teil (160) kontaktierenden Innenmantelfläche eine umlaufende Ausnehmung (116) ausgespart ist, in welche ein Ringdichtungselement (150) eingebracht ist,
c) zwischen einer Einstecköffnung des ersten rohrförmigen Teils (111) und dem Ringdichtungselement (150) in einem Aufnahmeraum (123) des ersten rohrförmigen Teils (111) ein federndes Krallelement (140) zum axialen Sichern des eingeschobenen zweiten rohrförmigen Teils (160) angeordnet ist,
d) das Anschlussstück derart ausgebildet ist, dass das zweite rohrförmige Teil (160) durch Einschieben in das erste rohrförmige Teil (111) in einer Einschubrichtung im Sinn einer Steckverbindung mit dem ersten rohrförmigen Teil (111) verbindbar ist;
e) das Anschlussstück derart stütznippellos ausgebildet ist, dass eine Innenmantelfläche des zweiten rohrförmigen Teils (160) in verbundenem Zustand nicht vom Anschlussstück kontaktiert wird;
**gekennzeichnet durch**
f) eine aktivierbare Verdrehsicherung (127, 181, 182, 185), welche im aktivierten Zustand eine Drehung des eingeschobenen zweiten rohrförmigen Teils (160) relativ zum ersten rohrförmigen Teil (111) verhindert.

2. Anschlussstück nach Anspruch 1, **gekennzeichnet durch** einen Klemmring (130) mit keilförmigem Querschnitt, der in einer sich in Bezug auf die Einstecköffnung nach hinten erweiternden Ausnehmung (123, 127) im ersten rohrförmigen Teil (111) aufgenommen ist, wobei das Krallelement (140) hinter dem Klemmring (130) angeordnet ist.

3. Anschlussstück nach Anspruch 2, **dadurch gekennzeichnet, dass** die Verdrehsicherung (181, 182, 185; 381, 383, 384, 385; 481, 483, 484, 486) einen axial beweglichen Abschnitt (181, 182; 381, 382, 384; 483, 484) umfasst, welcher zur Aktivierung in Einschubrichtung beweglich ist und mit dem Klemmring (130; 330; 430) derart zusammenwirkt, dass durch die Aktivierung eine Drehbewegung des Klemmrings (130; 330; 430) relativ zum Anschlussstück um eine gemeinsame Achse des ersten und des eingeschobenen zweiten rohrförmigen Teils (111, 160; 311, 360; 411) verhindert wird.

4. Anschlussstück nach Anspruch 3, **dadurch gekennzeichnet, dass** der axial bewegliche Abschnitt (381, 382, 384; 483, 484) mit einem am Klemmring (330; 430) angeordneten Gegenstück formschlüssig in Eingriff bringbar ist.

5. Anschlussstück nach Anspruch 3, **dadurch gekennzeichnet, dass** der axial bewegliche Abschnitt (181, 182) mit einem Klemmkeil (127) zusammenwirkt, welcher die axiale Bewegung des Abschnitts (181, 182) in eine im Wesentlichen radiale auf den Klemmring umsetzt.

6. Anschlussstück nach Anspruch 2, **dadurch gekennzeichnet, dass** die. Verdrehsicherung mindestens einen im Anschlussstück exzentrisch schwenkbar gelagerten Schwenkhebel (681.1, 681.2) aufweist, welcher mit dem Klemmring (630) zusammenwirkt und welcher aus einer ersten Position in eine zweite Position schwenkbar ist, wobei eine radiale Eindringtiefe des Schwenkhebels (681.1, 681.2) in der zweiten Position grösser ist als in der ersten Position.

7. Anschlussstück nach einem der Ansprüche 2 bis 6, **dadurch gekennzeichnet, dass** der Klemmring (130; 330; 630; 690) an einer Aussenmantelfläche im Wesentlichen axial verlaufende Profilierungen (133; 333; 633; 693) zum Zusammenwirken mit der Ausnehmung aufweist.

8. Anschlussstück nach einem der Ansprüche 2 bis 7, **dadurch gekennzeichnet, dass** der Klemmring (130; 330) an einer Innenmantelfläche mindestens eine in axialer Richtung verlaufende Profilierung (137; 337) aufweist.

9. Anschlussstück nach einem der Ansprüche 1 bis 8, **dadurch gekennzeichnet, dass** zwischen der Einstecköffnung und dem Krallelement (140; 240; 340; 540; 640) im ersten rohrförmigen Teil (111; 211; 311; 511; 611) ein zweites Dichtungselement (125; 225; 330; 530; 625) angeordnet ist, um den Aufnahmeraum (123, 127; 223; 323; 523; 623) für das Krallelement (140; 240; 340; 540; 640) in Richtung der Einstecköffnung abzudichten.

10. Anschlussstück nach Anspruch 9 und einem der Ansprüche 2 bis 8, **dadurch gekennzeichnet, dass** der Klemmring (330; 530) das zweite Dichtungselement bildet.

11. Anschlussstück nach Anspruch 10, **dadurch gekennzeichnet, dass** der Klemmring einen formstabilen Grundkörper und einen elastischen Dichtungsteil, insbesondere eine Schicht aus einem thermoplastischen Elastomer, aufweist.

12. Anschlussstück nach Anspruch 10 oder 11, **dadurch gekennzeichnet, dass** der Klemmring (130; 630; 690) an einer Innenmantelfläche mindestens zwei beabstandete umlaufende Profilierungen (131; 631; 691) aufweist.

13. Anschlussstück nach einem der Ansprüche 1 bis 12, **dadurch gekennzeichnet, dass** die Verdrehsicherung einen von aussen freigebbaren Federmechanismus (281, 282) umfasst, welcher nach Freigabe derart mit dem Krallelement (240) zusammenwirkt, dass eine Drehbewegung des Krallelements (240) relativ zum Anschlussstück um eine gemeinsame Achse des ersten und des eingeschobenen zweiten rohrförmigen Teils (211; 260) verhindert wird.

14. Anschlussstück nach einem der Ansprüche 1 bis 13, **dadurch gekennzeichnet, dass** es im Bereich einer Innenmantelfläche des ersten rohrförmigen Teils eine erste umlaufende Führungsfläche (122) sowie eine in Bezug auf die Einstecköffnung des ersten rohrförmigen Teils hinter der ersten Führungsfläche angeordnete zweite umlaufende Führungsfläche (117) für das zweite rohrförmige Teil (160) aufweist, wobei die umlaufende Ausnehmung (116) für das Ringdichtungselement (150) zwischen der ersten Führungsfläche (122) und der zweiten Führungsfläche (117) angeordnet ist, wobei bevorzugt eine erste axiale Ausdehnung der ersten Führungsfläche (122) und eine zweite axiale Ausdehnung der zweiten Führungsfläche (117) jeweils mindestens ein Sechstel eines Innendurchmessers des ersten rohrförmigen Teils (111) betragen, besonders bevorzugt mindestens ein Viertel des Innendurchmessers.

15. Anschlussstück nach Anspruch 14, **dadurch gekennzeichnet, dass** das Anschlussstück einen Grundkörper aus Metall und einen Kappenteil umfasst, wobei die erste Führungsfläche am Kapptenteil und die zweite Führungsfläche am Grundkörper ausgebildet sind und wobei das Kappenteil insbesondere aus Metall hergestellt ist.

16. Anschlussstück nach Anspruch 15, **gekennzeichnet, durch** eine im Grundkörper aufgenommene, axial verschiebbare Hülse (719), in welcher die umlaufende Ausnehmung für das Ringdichtungselement (750) ausgespart ist, wobei die Hülse (719) einen Betätigungsflansch (719b) umfasst, welcher derart ausgebildet ist, dass er beim Einschieben des zweiten rohrförmigen Teils (760) von der Stirnseite des zweiten rohrförmigen Teils (760) kontaktiert und die Hülse (719) in axialer Richtung mitgenommen wird.

17. Anschlussstück nach Anspruch 16, **dadurch gekennzeichnet, dass** die Hülse (719) mit dem Kappenteil (720) derart zusammenwirkt, dass dieses in einer erste Stellung der Hülse (719) gegenüber dem Grundkörper (712) drehfest ist und dass dieses in einer zweiten, eingeschobenen Stellung der Hülse (719) gegenüber dem Grundkörper (712) drehbar ist.

18. Anschlussstück nach Anspruch 14, **dadurch gekennzeichnet, dass** das Anschlussstück einen Grundkörper aus Metall umfasst, an welchem sowohl die umlaufende Ausnehmung für das Ringdichtungselement als auch die erste umlaufende Führungsfläche und die zweite umlaufende Führungsfläche ausgebildet sind.

19. Anschlussstück nach einem der Ansprüche 15 bis 18, **dadurch gekennzeichnet, dass** der Grundkörper aus Kupfer oder einer kupferhaltigen Legierung hergestellt ist.

20. Anschlussstück nach einem der Ansprüche 15 bis 19, **gekennzeichnet durch** eine elektrische Kontaktregion (201, 202, 203) in einem Bereich eines Anschlags (218) für eine Stirnseite des zweiten rohrförmigen Teils (260), wobei die elektrische Kontaktregion (201, 202, 203) gegenüber dem Grundkörper (211) elektrisch isoliert ist und wobei eine elektrische Durchführung (204) zum Kontaktieren der Kontaktregion (201, 202, 203) von aussen vorhanden ist.

21. Anschlussstück nach einem der Ansprüche 1 bis 20, **dadurch gekennzeichnet, dass** das Krallelement (140) einen äusseren kreisringförmigen radialen Abschnitt (141) sowie einen nach innen anschliessenden geschlitzten inneren Abschnitt (142) mit einer Mehrzahl von Krallen (143) aufweist, wobei ein freies Ende der Krallen (143) jeweils einen konkaven Abschnitt aufweist und wobei insbesondere eine Kontur des freien Endes die Form eines Kreisabschnitts hat, mit einem Durchmesser, der einem Durchmesser des aufzunehmenden zweiten rohrförmigen Teils entspricht.

22. Anschlussstück nach einem der Ansprüche 1 bis 21, **dadurch gekennzeichnet, dass** das Ringdichtungselement (150; 170) eine Formdichtung in der Form einer Lippendichtung ist, wobei sich die Ausnehmung (116) für das Ringdichtungselement (150; 170) bevorzugt in Bezug auf die Einstecköffnung nach hinten erweitert und die Lippendichtung einen im Wesentlichen V-förmigen Querschnitt hat und mit ihrer offenen Stirnseite in Einschubrichtung in der Ausnehmung (116) aufgenommen ist.

23. Verbindungsstück (Fitting) umfassend ein Anschlussstück nach einem der Ansprüche 1 bis 22.

24. Armatur umfassend ein Anschlussstück nach einem der Ansprüche 1 bis 22.

25. Verfahren zur Herstellung eines Anschlussstücks nach einem der Ansprüche 1 bis 22, **dadurch gekennzeichnet, dass** das erste rohrförmige Teil des Anschlussstücks aus einem Rohrformling durch Umformen hergestellt wird, wobei nach Einsetzen des Krall-und/oder Klemmrings eine zwischen dem Krallelement und/oder dem Klemmring und der Einstecköffnung angeordnete erste umlaufende Führungsfläche erzeugt wird, wobei eine axiale Ausdehnung der ersten Führungsfläche mindestens ein Sechstel eines Innendurchmessers des ersten rohrförmigen Teils beträgt.

26. Verfahren zur Ermittlung der Einstecktiefe eines zweiten rohrförmigen Teils aus Metall in einem ersten rohrförmigen Teil aus Metall, **dadurch gekennzeichnet, dass** im Bereich eines Anschlags für das zweite rohrförmige Teil eine Induktivität und/oder Kapazität und/oder eine Änderung einer Induktivität und/oder Kapazität gemessen wird, um mindestens einen Messwert zu erhalten, wonach aus dem mindestens einen Messwert auf ein Vorhandensein des zweiten rohrförmigen Teils im Bereich des Anschlags geschlossen wird.
